# FASCICULE DE BREVET EUROPEEN

(11) **EP 2 274 236 B1**
(45) Date de publication et mention de la délivrance du brevet: **06.06.2012**
(21) Numéro de dépôt: 09727588.7
(22) Date de dépôt: 26.02.2009
(51) Int. Cl.: C01B 39/00, C01B 39/04, C01B 37/00

(54) **MATERIAU MESOSTRUCTURE A FORTE TENEUR EN ALUMINIUM ET CONSTITUE DE PARTICULES SPHERIQUES DE TAILLE SPECIFIQUE**
AUS KUGELFÖRMIGEN PARTIKELN VON SPEZIFISCHER GRÖSSE MESOSTRUKTURIERTES MATERIAL MIT HOHEM ALUMINIUMGEHALT
MESOSTRUCTURED MATERIAL HAVING A HIGH ALUMINIUM CONTENT AND COMPOSED OF SPHERICAL PARTICLES OF SPECIFIC SIZE

(30) Priorité: 31.03.2008 FR 0801764
(43) Date de publication de la demande: 19.01.2011
(73) Titulaire: IFP Energies nouvelles, 92852 Rueil-Malmaison Cedex (FR)
(72) Inventeur: CHAUMONNOT, Alexandra, F-69008 Lyon (FR); COUPE, Aurélie, F-77186 Noisiel (FR); SANCHEZ, Clément, F-91190 Gif-sur-Yvette (FR); BOISSIERE, Cédric, F-75013 Paris (FR); MARTIN, Michel, F-69006 Lyon (FR)
(86) Numéro de dépôt international: PCT/FR2009/000210
(87) Numéro de publication internationale: WO 2009/122023

(56) Documents cités:
- WO-A-2006/128989
- KARLSSON A ET AL: "Composites of micro- and mesoporous materials: simultaneous syntheses of MFI/MCM-41 like phases by a mixed template approach" MICROPOROUS AND MESOPOROUS MATERIALS, ELSEVIER SCIENCE PUBLISHING, NEW YORK, US, vol. 27, no. 2-3, 1 février 1999 (1999-02-01), pages 181-192, XP004163631 ISSN: 1387-1811 cité dans la demande

## Description

La présente invention se rapporte au domaine des matériaux mésostructurés à base d'oxyde d'aluminium. Elle se rapporte également au domaine des matériaux mésostructurés à forte teneur en aluminium présentant une porosité hiérarchisée ou mixte dans le domaine de la microporosité et de la mésoporosité. Elle se rapporte également à la préparation de ces matériaux qui sont obtenus par l'emploi du procédé "EISA" (Evaporation Induced by Self Assembly) dénommé encore procédé d'auto-assemblage induit par évaporation. Les propriétés structurales et texturales des matériaux selon l'invention ainsi que leurs propriétés acido-basiques les rendent particulièrement adaptés pour des applications dans le domaine du raffinage et de la pétrochimie.

### Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée ou mixte, c'est-à-dire ayant des pores de plusieurs tailles, connaissent un très large développement au sein de la communauté scientifique depuis le milieu des années 1990 (G. J. de A. A. Soler-Illia, C. Sanchez, B. Lebeau, J. Patarin, Chem. Rev., 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est le plus souvent inférieure à la concentration micellaire critique, ce qui conduit soit à la formation de films mésostructurés dans le cas d'un dépôt sur substrat (technique "dip-coating"), soit à la formation d'une poudre mésostructurée après atomisation (technique aérosol) ou égouttage de la solution. A titre d'exemple, le brevet US 6.387.453 divulgue la formation de films hybrides organiques - inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de diamètre uniforme compris dans une gamme de 1,5 à 10 nm et des parois amorphes d'épaisseur de l'ordre de 1 à 2 nm a largement été étudiée. Par la suite, afin d'accroître les propriétés de stabilité hydrothermale tout en développant des propriétés d'acido-basicité relatives à ces matériaux, l'incorporation de l'élément aluminium dans la charpente silicique amorphe par synthèse directe ou par des procédés de post-synthèse a été particulièrement regardée, les matériaux aluminosilicates obtenus possédant un rapport molaire Si/Al compris dans une gamme de 1 à 1000 (S. Kawi, S. C. Shen, Stud. Surf. Sci. Catal., 2000,129, 227 ; S. Kawi, S. C. Shen, Stud. Surf. Sci. Catal., 2000,129, 219 ; R. Mokaya, W. Jones, Chem. Commun., 1997, 2185). Les propriétés de stabilité hydrothermale et les propriétés d'acido-basicité ainsi développées par ces aluminosilicates n'ont cependant pas permis leur utilisation à un stade industriel dans des procédés de raffinage ou de pétrochimie, ce qui a progressivement conduit à l'utilisation de nouveaux agents structurants comme des macromolécules amphiphiles de type copolymères à bloc, ces dernières conduisant à des matériaux mésostructurés possédant une structure généralement hexagonale, cubique ou lamellaire, des pores de diamètre uniforme compris dans une gamme de 4 à 50 nm et des parois amorphes d'épaisseur comprise dans une gamme de 3 à 7 nm. En fonction de la structure et du degré d'organisation souhaité pour le matériau mésostructuré final, les méthodes de synthèse employées peuvent avoir lieu en milieu acide (pH ≤ 1) (WO 99/37705) ou en milieu neutre (WO 96/39357), la nature de l'agent structurant utilisé jouant également un rôle prépondérant. Les matériaux aluminosilicates mésostructurés ainsi obtenus présentent des propriétés de stabilité hydrothermale accrues par rapport à leur homologues synthétisés au moyen d'autres agents structurants, leurs propriétés d'acido-basicité demeurant à peu près similaires (1 < Si/Al < 1000). Des valeurs basses du rapport molaire Si/Al telles que Si/Al <20 sont toutefois difficiles à obtenir car il n'est pas aisé d'incorporer des quantités importantes d'aluminium dans le matériau via ces procédés opératoires particuliers (D. Zhao, J. Feng, Q. Huo, N. Melosh, G. H. Fredrickson, B. F. Chmelka, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000,129; 209).

Beaucoup de travaux ont par ailleurs été entrepris dans le but d'élaborer des matériaux aluminosilicates possédant à la fois les avantages d'une structure mésoporeuse organisée et ceux d'un réseau microcristallin. Plusieurs techniques de synthèse permettant l'élaboration de matériaux mixtes ou composites mésostructurés/zéolithes ont ainsi été répertoriées dans la littérature ouverte. Une première technique de synthèse consiste à synthétiser en première étape un matériau aluminosilicate mésostructuré selon les méthodes classiques explicitées ci-dessus puis, en deuxième étape, à imprégner ce matériau avec un agent structurant habituellement utilisé dans la synthèse de matériaux zéolithiques. Un traitement hydrothermal adapté conduit à une zéolithisation des parois (ou murs) amorphes de l'aluminosilicate mésostructurée de départ (US 6 669 924). Une deuxième technique de synthèse consiste à mettre en présence une solution colloïdale de germes de zéolithes avec un agent structurant habituellement utilisé pour créer une mésostructuration du matériau final. L'élaboration d'une matrice inorganique à mésoporosité organisée et la croissance au sein de cette matrice des germes de zéolithes, de façon à obtenir un matériau aluminosilicate mésostructuré présentant des parois (ou murs) cristallisées, sont simultanées (Z. Zhang, Y. Han, F. Xiao, S. Qiu, L. Zhu, R. Wang, Y. Yu, Z. Zhang, B. Zou, Y. Wang, H. Sun, D. Zhao, Y. Wei, J. Am. Chem. Soc., 2001, 123, 5014 ; Y. Liu, W. Zhang, T. J. Pinnavaia, J. Am. Chem., Soc., 2000, 122, 8791). Une variante à ces deux techniques consiste initialement dans la préparation d'un mélange de précurseurs d'aluminium et de silicium en présence de deux agents structurants, l'un susceptible de générer un système zéolithique, l'autre susceptible de générer une mésostructuration. Cette solution est ensuite soumise à deux étapes de cristallisation à l'aide de conditions de traitement hydrothermale variables, une première étape qui conduit à la formation de la structure mésoporeuse à porosité organisée et une deuxième étape qui conduit à la zéolithisation des parois (ou murs) amorphes (A. Karlsson, M. Stöcker, R. Schmidt, Micropor. Mesopor. Mater., 1999, 27, 181). L'ensemble de ces méthodes de synthèse présente l'inconvénient d'endommager la structure mésoporeuse et donc de perdre les avantages de celle-ci dans le cas où la croissance des germes de zéolithes ou la zéolithisation des parois n'est pas parfaitement maîtrisée, ce qui rend ces techniques délicates à mettre en oeuvre. Il est possible d'éviter ce phénomène en élaborant directement des matériaux composites mésostructurés/zéolithes. Ceci peut se faire par traitement thermique d'un mélange d'une solution de germes de zéolithes et d'une solution de germes d'aluminosilicates mésostructurés (P. Prokesova, S. Mintova, J. Cejka, T. Bein, Micropor. Mesopor. Mater., 2003, 64, 165) ou bien par croissance d'une couche de zéolithe à la surface d'un aluminosilicates mésostructuré pré-synthétisé (D. T. On, S. Kaliaguine, Angew. Chem. Int. Ed., 2002, 41, 1036). D'un point de vue expérimental, à l'inverse des techniques mettant en jeu le procédé "EISA" décrites préalablement, les matériaux aluminosilicates à porosité hiérarchisée ainsi définis ne sont pas obtenus par une concentration progressive des précurseurs inorganiques et de(s) l'agent(s) structurant(s) au sein de la solution où ils sont présents mais sont classiquement obtenus par précipitation directe au sein d'une solution aqueuse ou dans des solvants polaires en jouant sur la valeur de la concentration micellaire critique de l'agent structurant. De plus, la synthèse de ces matériaux obtenue par précipitation nécessite une étape de mûrissement en autoclave et tous les réactifs ne sont pas intégrés aux produits en quantité stoechiométrique puisqu'ils peuvent se retrouver dans le surnageant. Les particules élémentaires habituellement obtenues ne présentent pas de forme régulière et sont caractérisées généralement par une taille variant généralement entre 200 et 500 nm et parfois plus.

WO 2006/128989 A1 décrit un matériau mésostructuré constitué d'au moins deux particules sphériques élémentaires, lesdites particules ayant un diamètre maximal de 10 µm. Ce document n'enseigne pas de méthode permettant d'obtenir des particules sphériques de taille plus importantes en gérant les cinétiques d'évaporation de manière à obtenir une mésostructure homogène dans lesdites particules sphériques.

### Résumé

L'invention porte sur un matériau mésostructuré constitué d'au moins deux particules sphériques élémentaires, chacune desdites particules sphériques comprenant une matrice mésostructurée à base d'oxyde d'aluminium, ladite matrice ayant un diamètre de pores compris entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaires ayant un diamètre D tel que 10 < D (µm) ≤ 100. Ladite matrice mésostructurée à base d'oxyde d'aluminium comprend préférentiellement de l'oxyde de silicium dans une proportion telle que le rapport molaire Si/Al de ladite matrice soit strictement inférieur à 1.

Chacune desdites particules sphériques élémentaires peut également comprendre des nanocristaux zéolithiques ayant une ouverture de pores comprise entre 0,2 et 2 nm de sorte que ledit matériau selon l'invention présente une porosité mixte de nature à la fois mésostructurée et zéolithique.

La présente invention concerne également la préparation du matériau selon l'invention. Un procédé de préparation du matériau selon l'invention appelé "procédé principal de préparation selon l'invention" comprend a) le mélange en solution d'au moins un tensioactif, d'au moins un précurseur aluminique et éventuellement d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, éventuellement d'au moins un précurseur silicique et d'au moins une fraction du produit solide obtenu à l'étape d) de manière à former une suspension ; f) l'atomisation par aérosol de la suspension obtenue à l'étape e) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g) le séchage desdites gouttelettes obtenues à l'étape f) et h) l'élimination dudit tensioactif introduit dans lesdites étapes a) et e) pour l'obtention d'un matériau à porosité mésostructurée. Ledit procédé est appelé dans la suite de l'exposé "procédé principal de préparation selon l'invention".

Pour la préparation d'un matériau mixte mésostructuré/zéolithique, on procède par exemple à une étape préalable a₀) consistant en la synthèse, en présence d'au moins un agent structurant, de nanocristaux zéolithiques de taille nanométrique maximale égale à 1000 nm afin d'obtenir une solution colloïdale dans laquelle sont dispersés lesdits nanocristaux ou on peut introduire dans le mélange selon les étapes a) et e) décrites ci-dessus des cristaux zéolithiques, qui présentent la caractéristique de se disperser sous la forme de nanocristaux de taille nanométrique maximale égale à 1000 nm en solution. La structure ordonnée de la matrice de chacune des particules sphériques constituant le matériau selon l'invention est consécutive au phénomène de micellisation ou d'auto-assemblage induit par le procédé "EISA".

### Intérêt

Le matériau mésostructuré selon l'invention est un matériau constitué de particules sphériques élémentaires, chacune desdites particules comprenant une matrice mésostructurée présentant une teneur élevée en aluminium. Ladite matrice mésostructurée peut également contenir de l'oxyde de silicium, ce qui, dans ce cas, confère au matériau selon l'invention des propriétés d'acido-basicité intéressantes. La présente invention offre également un matériau à porosité mixte dans lequel des nanocristaux zéolithiques sont piégés dans la matrice mésostructurée, un tel matériau étant avantageux car il présente simultanément les propriétés structurales, texturales et d'acido-basicité propres aux matériaux de la famille des zéolithes et aux matériaux à base d'oxyde d'aluminium, plus particulièrement aux matériaux aluminosilicates mésostructurés. La structure ordonnée du matériau selon l'invention étant consécutive au phénomène de micellisation ou d'auto-assemblage induit par le procédé "EISA", permet d'élaborer de façon aisée des matériaux mésostructurés, en présence ou non de nanocristaux zéolithiques, sans endommager la nature de la phase mésostructurée ni celle de la phase zéolithique éventuellement présente et de travailler avec une large gamme de nanocristaux de zéolithes quels que soient leurs procédés de synthèse initiaux. En effet, pour la préparation d'un matériau à porosité mixte mésostructurée/zéolithique, on peut utiliser des cristaux zéolithiques de taille bien supérieure à 1000 nm dès lors qu'ils ont la propriété de se disperser en solution, notamment en solution acide et très préférentiellement en solution aquo-organique acide, sous la forme de nanocristaux de taille nanométrique maximale égale à 1000 nm. Par ailleurs, l'élaboration à l'échelle du "submicronique° d'un matériau mésostructuré/zéolithique conduit à une connexion privilégiée des zones microporeuses et mésoporeuses au sein d'une même particule sphérique.

De plus, le matériau mésostructuré selon l'invention, en présence ou non de nanocristaux zéolithiques, est constitué de particules élémentaires sphériques. Lesdites particules ont un diamètre D tel que 10 < D (µm) ≤ 100 et de préférence D est compris en 11 et 70 µm. La taille contrôlable des ces particules résultant de la mise en oeuvre et de la maîtrise du procédé "EISA" par la demanderesse, ainsi que leur forme parfaitement sphérique permettent d'avoir un meilleur contrôle de la diffusion des composés lors de l'emploi du matériau selon l'invention comme catalyseur ou adsorbant pour des applications dans le domaine du raffinage et de la pétrochimie, comparativement à des matériaux connus de l'état de la technique se présentant sous la forme de particules élémentaires de forme non homogène, c'est-à-dire irrégulière.

De plus, par rapport aux synthèses connues des matériaux mésostructurés, la préparation du matériau selon l'invention est réalisée en continu, la durée de préparation est réduite (quelques heures contre de 12 à 24 heures en utilisant l'autoclavage) et la stoechiométrie des espèces non volatiles présentes dans la solution initiale des réactifs est maintenue dans le matériau de l'invention.

### Exposé de l'invention

La présente invention a pour objet un matériau mésostructuré constitué d'au moins deux particules sphériques élémentaires, chacune desdites particules comprenant une matrice mésostructurée à base d'oxyde d'aluminium, ladite matrice ayant un diamètre de pores compris entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaires ayant un diamètre D supérieur à 10 µm et inférieur ou égal à 100 µm (10 < D (µm) ≤ 100).

Par matériau mésostructuré, on entend au sens de la présente invention un matériau présentant au moins une porosité organisée à l'échelle des mésopores de chacune desdites particules sphériques, c'est-à-dire une porosité organisée à l'échelle des pores ayant un diamètre uniforme compris entre 1,5 et 30 nm et de préférence entre 1,5 et 10 nm et répartis de façon homogène et régulière dans chacune desdites particules (mésostructuration du matériau). Plus précisément, dans le cadre de la présente invention, la mésostructuration du matériau est inhérente à la matrice, incluse dans ledit matériau : la matrice à base d'oxyde d'aluminium, comprise dans chacune desdites particules sphériques constituant le matériau selon l'invention, est mésostructurée. Elle présente des mésopores ayant un diamètre uniforme compris entre 1,5 et 30 nm et de préférence entre 1,5 et 10 nm, répartis de façon homogène et régulière dans chacune desdites particules. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. La matière située entre les mésopores de la matrice mésostructurée est amorphe et forme des parois, ou murs, dont l'épaisseur est comprise entre 1 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde d'aluminium, laquelle peut être hexagonale, vermiculaire, cholestérique, lamellaire, bicontinue ou cubique et de façon préférée vermiculaire. Le matériau selon l'invention présente également une macroporosité texturale interparticulaire.

Conformément à l'invention, lesdites particules sphériques élémentaires constituant le matériau selon l'invention ont un diamètre D, exprimé en micron, strictement supérieur à 10 µm et inférieur ou égal à 100 µm (10 < D (µm) ≤ 100). De préférence, le diamètre D desdites particules sphériques est avantageusement compris entre 11 et 70 µm. Selon un mode de réalisation particulier du matériau selon l'invention, lesdites particules sphériques élémentaires présentent un diamètre D compris entre 11 et 50 µm et de manière très préférée entre 15 et 50 µm. Plus précisément, lesdites particules sphériques élémentaires sont présentes dans le matériau selon l'invention sous la forme d'agrégats.

Le matériau selon l'invention présente avantageusement une surface spécifique comprise entre 100 et 1200 m²/g, de manière avantageuse comprise entre 200 et 1000 m²/g et de manière très avantageuse comprise entre 300 et 800 m²/g.

Selon un premier mode de réalisation du matériau selon l'invention, la matrice à base d'oxyde d'aluminium, mésostructurée, est entièrement aluminique.

Selon un deuxième mode de réalisation du matériau selon l'invention, la matrice à base d'oxyde d'aluminium, mésostructurée, comprend en outre de l'oxyde de silicium. La matrice, incluse dans chacune des particules sphériques du matériau selon l'invention, est dans ce cas un aluminosilicate. La teneur en oxyde de silicium dans la matrice aluminosilicate est telle que le rapport molaire Si/Al est strictement inférieur à 1.

Selon un troisième mode de réalisation du matériau selon l'invention, chacune desdites particules sphériques comprend en outre des nanocristaux zéolithiques ayant une ouverture de pores compris entre 0,2 et 2 nm. Le matériau selon l'invention présente alors à l'échelle desdites particules sphériques non seulement une porosité organisée à l'échelle des mésopores ayant un diamètre uniforme compris entre 1,5 et 30 nm et de préférence entre 1,5 et 10 nm, répartis de façon homogène et régulière dans chacune desdites particules (mésostructuration telle que décrite plus haut) mais également une microporosité de type zéolithique dont les caractéristiques (type structural de la zéolithe, composition chimique de la charpente zéolithique) sont fonction du choix des nanocristaux zéolithiques. Conformément au troisième mode de réalisation du matériau selon l'invention, les nanocristaux zéolithiques présentent une ouverture de pores comprise entre 0,2 et 2 nm, de préférence entre 0,2 et 1 nm et de manière très préférée entre 0,2 et 0,6 nm. Lesdits nanocristaux génèrent la microporosité dans chacune des particules sphériques élémentaires constituant le matériau selon l'invention. Conformément à ce troisième mode de réalisation du matériau selon l'invention, ladite matrice peut être soit entièrement aluminique soit comprendre en outre de l'oxyde de silicium. On appellera dans la suite de l'exposé le matériau selon le troisième mode de réalisation un matériau mixte mésostructurés / zéolithique.

Conformément au troisième mode de réalisation du matériau mésostructuré selon l'invention, les nanocristaux zéolithiques représentent avantageusement de 0,1 à 30% poids, de préférence de 0,1 à 20% poids et de manière très préférée de 0,1 à 10% poids du matériau de l'invention. Toute zéolithe et en particulier, mais de façon non restrictive, celles répertoriées dans "Atlas of zeolite framework types", 6th revised Edition, 2007, Ch.Baerlocher, L.B. McCusker, D.H.Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1. De manière très préférée, les nanocristaux zéolithiques comprennent au moins une zéolithe choisie parmi les zéolithes de type structural MFI, BEA, FAU et LTA. Des nanocristaux de différentes zéolithes et notamment de zéolithes de types structuraux différents peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium et le gallium, de préférence l'aluminium. Les nanocristaux zéolithiques ont une taille maximale de 1000 nm et de façon préférée ont une taille comprise entre 30 et 500 nm.

Le matériau mésostructuré de la présente invention, ayant une matrice mésostructurée entièrement aluminique ou de nature aluminosilicate et présentant éventuellement des nanocristaux de zéolithes piégés au sein de cette matrice, peut être obtenu sous forme de poudre, de billes, de pastilles, de granulés, ou d'extrudés, les opérations de mises en forme étant réalisées par les techniques classiques connues de l'Homme du métier. De préférence, le matériau selon l'invention est obtenu sous forme de poudre, laquelle est constituée de particules sphériques élémentaires ayant un diamètre D tel que 10 < D (µm) ≤ 100, ce qui facilite la diffusion éventuelle des composés dans le cas de l'emploi du matériau selon l'invention dans une application industrielle potentielle.

La présente invention a également pour objet la préparation du matériau selon l'invention. Elle se propose d'abord de fournir un procédé de préparation du matériau mésostructuré selon l'invention comprenant une matrice mésostructurée entièrement aluminique ou de nature aluminosilicate. Un procédé de préparation d'un tel matériau selon l'invention appelé "procédé principal de préparation selon l'invention" comprend a) le mélange en solution d'au moins un tensioactif, d'au moins un précurseur aluminique et éventuellement d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, éventuellement d'au moins un précurseur silicique et d'au moins une fraction du produit solide obtenu à l'étape d) de manière à former une suspension ; f) l'atomisation par aérosol de la suspension obtenue à l'étape e) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g) le séchage desdites gouttelettes obtenues à l'étape f) et h) l'élimination dudit tensioactif introduit dans lesdites étapes a) et e) pour l'obtention d'un matériau à porosité mésostructurée. Ledit procédé est appelé dans la suite de l'exposé "procédé principal de préparation selon l'invention".

Le pourcentage volumique en composés non volatils présents dans la suspension selon l'étape e) du procédé principal de préparation selon l'invention est au moins égal à 7 %, de préférence au moins égal à 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) (AlO_{1,5} et éventuellement SiO₂) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg/}P_{inorg} avec m_{inorg} = masse finale de la fraction inorganique sous forme d'oxyde(s) condensé(s) présente dans la particule élémentaire, c'est-à-dire AlO_{1,5} et éventuellement SiO₂ issus des précurseurs inorganiques présents dans l'étape a) et l'étape e) du procédé principal de préparation selon l'invention additionnés de la fraction inorganique du produit solide de l'étape c) du procédé principal de préparation selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org}/ρ_{org} avec m_{org} = masse de tensioactif présente dans chaque particule sphérique élémentaire, c'est-à-dire le tensioactif présent dans l'étape a) et dans l'étape e) du procédé principal de préparation selon l'invention additionnés de la fraction organique du produit solide de l'étape c) du procédé principal de préparation selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Conformément audit procédé principal de préparation selon l'invention, la fraction du produit solide obtenu à l'étape d) et utilisée pour la mise en oeuvre de ladite étape e) représente de 1 à 100 % poids, de préférence de 1 à 80% poids et de manière encore plus préférée de 5 à 50 % poids de la quantité totale de produit solide broyé à l'étape d).

Selon un premier mode particulier de réalisation du procédé principal de préparation selon l'invention, une partie seulement du produit solide issu de l'étape c) est broyée au cours de l'étape d) du procédé selon l'invention ; la partie non broyée n'étant généralement pas réutilisée.

Selon un deuxième mode particulier de réalisation du procédé principal de préparation selon l'invention, l'étape h) d'élimination du tensioactif est réalisée préalablement à l'étape de broyage selon l'étape d) de telle sorte que ladite étape d) est effectuée sur un produit solide exempt de tensioactifs organiques. Les étapes a), b), c), h), d), e) et f) devenues consécutives dans le cas particulier dudit deuxième mode de préparation selon l'invention sont suivies par un nouveau cycle de séchage des gouttelettes et d'élimination du tensioactif introduit dans l'étape e) comme décrit selon les étapes g) et h).

Pour le cas particulier du matériau selon l'invention constitué de particules sphériques élémentaires ayant un diamètre D compris entre 11 et 50 µm, de préférence entre 15 et 50 µm, on préfère mettre en oeuvre un procédé de préparation simplifié appelé "procédé simplifié de préparation selon l'invention" comprenant les étapes : a) le mélange en solution d'au moins un tensioactif, d'au moins un précurseur aluminique et éventuellement d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, et h) l'élimination dudit tensioactif pour l'obtention d'un matériau à porosité mésostructurée. Conformément audit procédé simplifié de préparation selon l'invention, le pourcentage volumique en composés non volatils présents dans la solution selon l'étape a) du procédé simplifié de préparation selon l'invention est au moins égal à 7 %, de préférence au moins égal à 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) (AlO_{1,5} et éventuellement SiO₂) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile Vi_{norg} est défini par le rapport m_{inorg}/ρ_{inorg} avec m_{inorg} = masse finale de la fraction inorganique sous forme d'oxyde(s) condensé(s) présente dans la particule élémentaire, c'est-à-dire AlO_{1,5} et éventuellement SiO₂ issus des précurseurs inorganiques présents dans l'étape a) du procédé simplifié de préparation selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org}/p_{org} avec m_{org} = masse de tensioactif présente dans chaque particule sphérique élémentaire, c'est-à-dire le tensioactif présent dans l'étape a) du procédé simplifié de préparation selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Le précurseur aluminique et éventuellement le précurseur silicique utilisé(s) dans les étapes a) et e) du procédé principal de préparation selon l'invention ou dans l'étape a) du procédé simplifié de préparation selon l'invention sont des précurseurs d'oxydes inorganiques bien connus de l'Homme du métier. Le précurseur aluminique est avantageusement un sel inorganique d'aluminium de formule AlX₃, X étant un halogène ou le groupement NO₃. De préférence, X est le chlore. Il est également possible d'employer comme sel inorganique du sulfate d'aluminium Al₂(SO₄)₃. Le précurseur aluminique peut être aussi un précurseur organométallique de formule Al(OR")₃ ou R" = éthyle, isopropyle, n-butyle, s-butyle ou t-butyle ou un précurseur chélaté tel que l'aluminium acétylacétonate (Al(C₅H₈O₂)₃). Le précurseur aluminique peut aussi être un oxyde ou un hydroxyde d'aluminium. Le précurseur silicique, s'il est présent dans les étapes a) et e) du procédé principal de préparation selon l'invention ou s'il est présent dans l'étape a) du procédé simplifié de préparation selon l'invention, est obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4.

Le tensioactif utilisé dans les étapes a) et e) du procédé principal de préparation selon l'invention ou dans l'étape a) du procédé simplifié de préparation selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Fôrster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans les étapes a) et e) du procédé principal de préparation selon l'invention ou dans l'étape a) du procédé simplifié de préparation selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.

L'étape d'atomisation selon les étapes b) et f) du procédé principal de préparation selon l'invention ou l'étape d'atomisation selon l'étape b) du procédé simplifié de préparation selon l'invention produit des gouttelettes sphériques présentant un diamètre inférieur ou égal à 300 µm par l'utilisation d'une buse de pulvérisation, ladite buse pouvant être "mono-fluide" ou "bi-fluide" (avec contrôle de la pression d'un gaz tel que de l'air comprimé ou de l'azote) selon les termes connus de l'Homme du métier. Par exemple des buses de chez Spraying System Emani peuvent être employées (buse "mono-fluide" de type N22^{®} ou "bi-fluide" de type SU4^{®} par exemple). La distribution en taille de ces gouttelettes est de type lognormale. L'atomisation de la solution se fait dans une chambre dans laquelle est envoyé un gaz vecteur, un mélange air sec/azote pour les plus petites installations et azote seul pour des installations plus conséquentes. Conformément aux étapes c) et g) du procédé principal de préparation selon l'invention ou conformément à l'étape c) du procédé simplifié de préparation selon l'invention, on procède au séchage desdites gouttelettes. Ce séchage est réalisé par le contact desdites gouttelettes avec le gaz ci-dessus, ce qui conduit à l'évaporation progressive de la solution respectivement de la solution, par exemple de la solution aquo-organique acide respectivement de la solution aquo-organique, obtenue au cours de l'étape a) respectivement de l'étape e) du procédé principal de préparation selon l'invention ou à l'évaporation progressive de la solution obtenue au cours de l'étape a) du procédé simplifié de préparation selon l'invention, et ainsi à l'obtention de particules élémentaires sphériques. La température de sortie assurant le séchage dans la chambre de l'atomiseur est comprise dans une gamme de 80 à 450°C. La distribution de temps de séjour des gouttelettes ou particules dans la chambre d'atomisation est de l'ordre de quelques secondes. Lors de l'étape d) du procédé principal selon l'invention, les particules sont broyées (broyeur jet d'air Netzsch CGS10 par exemple) et ramenées à quelques µm (3 à 5 µm en général). Suivant l'installation, les particules sont récoltées à la sortie d'un cyclone ou dans un filtre à manche. Le séchage des particules selon les étapes c) et g) du procédé principal de préparation selon l'invention et selon l'étape c) du procédé simplifié de préparation selon l'invention est avantageusement suivi d'un traitement thermique complémentaire à une température comprise entre 50 et 300°C avant l'élimination du tensioactif au cours de l'étape h) du procédé principal selon l'invention ou du procédé simplifié selon l'invention afin d'obtenir le matériau selon l'invention à porosité mésostructurée. Ladite élimination du tensioactif introduit dans les étapes a) et e) du procédé principal de préparation selon l'invention ou dans l'étape a) du procédé simplifié de préparation selon l'invention est avantageusement réalisée par des procédés d'extraction chimique ou par traitement thermique et de préférence par calcination sous air dans une gamme de température de 300 à 1000°C et plus précisément dans une gamme de 450 à 600°C pendant une durée de 1 à 24 heures et de façon préférée pendant une durée de 2 à 6 heures.

La présente invention se propose également de fournir deux procédés principaux de préparation alternatifs d'un matériau mixte mésostructuré / zéolithique selon l'invention, c'est-à-dire un matériau dans lequel chacune des particules sphériques qui le constitue comprend une matrice mésostructurée, entièrement aluminique ou de nature aluminosilicate, et des nanocristaux zéolithiques ayant une ouverture de pores comprise entre 0,2 et 2 nm.

Un premier mode de réalisation d'un des deux procédés principaux de préparation du matériau présentant des nanocristaux zéolithiques piégés dans la matrice oxyde mésostructurée selon l'invention appelé par la suite "premier procédé principal de préparation du matériau mixte mésostructuré/zéolithique selon l'invention" comprend les mêmes étapes a), b), c) d), e), f), g) et h) du procédé principal de préparation selon l'invention décrit plus haut pour la préparation d'un matériau mésostructuré ayant une matrice mésostructurée entièrement aluminique ou de nature aluminosilicate. Ledit premier procédé principal de préparation du matériau mixte mésostructuré/zéolithique selon l'invention comporte également une étape préalable a₀) consistant en la synthèse, en présence d'un agent structurant, de nanocristaux zéolithiques de taille nanométrique maximale égale à 1000 nm afin d'obtenir une solution colloïdale dans laquelle sont dispersés lesdits nanocristaux. Ladite solution colloïdale obtenue selon a₀) est introduite dans le mélange selon les étapes a) et e) du procédé principal de préparation selon l'invention décrit plus haut dans la présente description. Ledit premier procédé principal de préparation du matériau mixte mésostructuré/zéolithique selon l'invention comprend donc : a₀) la synthèse, en présence d'au moins un agent structurant, de nanocristaux zéolithiques de taille nanométrique maximale égale à 1000 nm afin d'obtenir une solution colloïdale dans laquelle sont dispersés lesdits nanocristaux ; a') le mélange en solution d'au moins un tensioactif, d'au moins un précurseur aluminique et éventuellement d'au moins un précurseur silicique, et d'au moins une solution colloïdale obtenue selon a₀) ; b') l'atomisation par aérosol de la solution obtenue à l'étape a') en utilisant une buse de pulvérisation qui conduit à la formation de gouttelettes liquides présentant un diamètre inférieur ou égal à 300 µm ; c') le séchage desdites gouttelettes, d') le broyage du produit solide obtenu à l'étape c') ; e') le mélange en solution d'au moins un tensioactif, d'au moins un précurseur aluminique et éventuellement d'au moins un précurseur silicique, d'au moins une solution colloïdale obtenue selon a₀) et d'au moins une fraction du produit solide obtenu à l'étape d') de manière à former une suspension ; f') l'atomisation par aérosol de la suspension obtenue à l'étape e') en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g') le séchage desdites gouttelettes obtenues à l'étape f') et h') l'élimination dudit tensioactif introduit dans les étapes a') et e') pour l'obtention d'un matériau mixte mésostructuré/zéolithique.

Le pourcentage volumique en composés non volatils présents dans la suspension selon l'étape e') du premier procédé principal de préparation du matériau mixte mésostructuré/zéolithique selon l'invention est au moins égal à 7 %, de préférence au moins égal à 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg}/ρ_{inorg} avec m_{inorg} = masse finale de la fraction inorganique sous forme d'oxyde(s) condensé(s) présente dans ladite particule sphérique élémentaire, c'est-à-dire AlO_{1,5} et éventuellement SiO₂ et des nanocristaux de zéolithes issus respectivement des précurseurs inorganiques et de la solution colloïdale stable des nanocristaux de zéolithes présents dans l'étape a') et l'étape e') du premier procédé principal de préparation du matériau mixte mésostructuré/zéolithique selon l'invention additionnés de la fraction inorganique du produit solide de l'étape c') du premier procédé principal de préparation du matériau mixte mésostructuré/zéolithique selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org}/ρ_{org} avec m_{org} = masse de tensioactif présente dans chaque particule sphérique élémentaire, c'est-à-dire le tensioactif présent dans l'étape a') et dans l'étape e') du premier procédé principal de préparation du matériau mixte mésostructuré/zéolithique selon l'invention additionnés de la fraction organique du produit solide de l'étape c') du premier procédé principal de préparation du matériau mixte mésostructuré/zéolithique selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Conformément audit premier procédé principal de préparation du matériau mixte mésostructuré / zéolithique selon l'invention, la fraction du produit solide obtenu à l'étape d') et utilisée pour la mise en oeuvre de ladite étape e') représente de 1 à 100 % poids, de préférence de 1 à 80% poids et de manière encore plus préférée de 5 à 50 % poids de la quantité totale de produit solide broyé à l'étape d').

Selon un premier mode particulier de réalisation dudit premier procédé principal de préparation du matériau mixte mésostructuré / zéolithique selon l'invention, une partie seulement du produit solide issu de l'étape c') est broyée au cours de l'étape d') du procédé selon l'invention ; la partie non broyée n'étant généralement pas réutilisée.

Selon un deuxième mode particulier de réalisation dudit premier procédé principal de préparation du matériau mixte mésostructuré / zéolithique selon l'invention, l'étape h') d'élimination du tensioactif est réalisée préalablement à l'étape de broyage selon l'étape d') de telle sorte que ladite étape d') est effectuée sur un produit solide exempt de tensioactifs organiques. Les étapes a'), b'), c'), h'), d'), e') et f') devenues consécutives dans le cas particulier dudit deuxième mode de préparation du matériau mixte mésostructuré / zéolithique selon l'invention sont suivies par un nouveau cycle de séchage des gouttelettes et d'élimination du tensioactif introduit dans l'étape e') comme décrit selon les étapes g') et h').

Pour le cas particulier du matériau selon l'invention constitué de particules sphériques de diamètre D compris entre 11 et 50 µm, de préférence entre 15 et 50 µm et comprenant une matrice mésostructurée, entièrement aluminique ou de nature aluminosilicate, et des nanocristaux zéolithiques ayant une ouverture de pores comprise entre 0,2 et 2 nm, on préfère mettre en oeuvre un procédé de préparation simplifié appelé "premier procédé simplifié de préparation du matériau mixte mésostructuré / zéolithique selon l'invention" comprenant les étapes : a₀) la synthèse, en présence d'au moins un agent structurant, de nanocristaux zéolithiques de taille nanométrique maximale égale à 1000 nm afin d'obtenir une solution colloïdale dans laquelle sont dispersés lesdits nanocristaux ; a') le mélange en solution d'au moins un tensioactif, d'au moins un précurseur aluminique et éventuellement d'au moins un précurseur silicique, et d'au moins une solution colloïdale obtenue selon a₀) ; b') l'atomisation par aérosol de la solution obtenue à l'étape a') en utilisant une buse de pulvérisation qui conduit à la formation de gouttelettes liquides présentant un diamètre inférieur ou égal à 300 µm ; c') le séchage desdites gouttelettes, et h') l'élimination dudit tensioactif pour l'obtention d'un matériau mixte mésostructuré / zéolithique.

Conformément audit premier procédé simplifié de préparation du matériau mixte mésostructuré / zéolithique selon l'invention, le pourcentage volumique en composés non volatils présents dans la solution selon l'étape a') du premier procédé simplifié de préparation du matériau mixte mésostructuré / zéolithique selon l'invention est égal à au moins 7 %, de préférence égal à au moins 7,5 % et de façon encore plus préférée égal à au moins 10 %. Ledit pourcentage volumique en composés non volatils est défini comme étant le rapport du volume occupé par la fraction inorganique non volatile sous forme d'oxyde(s) condensé(s) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg}/ρ_{inorg} avec m_{inorg} = masse finale de la fraction inorganique sous forme d'oxyde(s) condensé(s) présente dans la particule élémentaire, c'est-à-dire AlO_{1,5} et éventuellement SiO₂ et des nanocristaux de zéolithes issus respectivement des précurseurs inorganiques et de la solution colloïdale stable des nanocristaux de zéolithes présents dans l'étape a') du premier procédé simplifié de préparation du matériau mixte mésostructuré / zéolithique selon l'invention et ρ_{inorg} est en moyenne égal à 2 (approximation valable pour une fraction inorganique du type "réseau aluminositicate"). De même, le volume occupé par la fraction organique non volatile V_{org} est défini par le rapport m_{org}/ρ_{org} avec m_{org} = masse de tensioactif présente dans chaque particule sphérique élémentaire, c'est-à-dire le tensioactif présent dans l'étape a') du premier procédé simplifié de préparation du matériau mixte mésostructuré / zéolithique selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Conformément à l'étape a₀) du premier procédé principal respectivement du premier procédé simplifié de préparation du matériau mixte mésostructuré/zéolithique selon l'invention, les nanocristaux zéolithiques sont synthétisés selon des protocoles opératoires connus de l'Homme du métier. En particulier, la synthèse de nanocristaux de zéolithe Bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe faujasite a été décrite dans Kloetstra et coll., Microporous Mater., 1996, 6, 287. La synthèse de nanocristaux de zéolithe ZSM-5 a été décrite dans plusieurs publications : R. de Ruiter et coll., Synthesis of Microporous Materials, Vol. I ; M. L. Occelli, H. E. Robson (eds.), Van Nostrand Reinhold, New York, 1992, 167 ; A.E. Persson, B.J. Schoeman, J. Sterte, J.-E. Otterstedt, Zeolites, 1995, 15, 611-619. On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium et le gallium, de préférence au moins une source aluminique, et au moins un agent structurant. Le mélange réactionnel est soit aqueux soit aquo-organique, par exemple un mélange eau- alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille des alcalins (Cs, K, Na, etc.), des éthercouronnes, des diamines ainsi que tout autre agent structurant bien connu de l'Homme du métier.

Dans un deuxième mode de réalisation du procédé de préparation du matériau mixte mésostructuré / zéolithique selon l'invention appelé par la suite "deuxième procédé principal de préparation du matériau mixte mésostructuré / zéolithique selon l'invention", on utilise initialement des cristaux zéolithiques, qui présentent la caractéristique de se disperser sous la forme de nanocristaux de taille nanométrique maximale égale à 1000 nm en solution, par exemple en solution aquo-organique acide. Lesdits cristaux zéolithiques sont introduits dans le mélange selon les étapes a) et e) du procédé principal de préparation selon l'invention décrit plus haut pour la préparation d'un matériau mésostructuré ayant une matrice mésostructurée entièrement aluminique ou de nature aluminosilicate. Ledit deuxième procédé principal de préparation du matériau mixte mésostructuré / zéolithique selon l'invention comprend a") le mélange en solution d'au moins un tensioactif, d'au moins un précurseur aluminique, éventuellement d'au moins un précurseur silicique, et de cristaux zéolithiques se dispersant sous la forme de nanocristaux de taille nanométrique maximale égale à 1000 nm dans ladite solution ; b") l'atomisation par aérosol de la solution obtenue à l'étape a") en utilisant une buse de pulvérisation qui conduit à la formation de gouttelettes liquides présentant un diamètre inférieur ou égal à 300 µm ; c") le séchage desdites gouttelettes, d") le broyage du produit solide obtenu à l'étape c") ; e") le mélange en solution d'au moins un tensioactif, d'au moins un précurseur aluminique, éventuellement d'au moins un précurseur silicique, de cristaux zéolithiques se dispersant sous la forme de nanocristaux de taille nanométrique maximale égale à 1000 nm dans ladite solution et d'au moins une fraction du produit solide obtenu à l'étape d") de manière à former une suspension ; f") l'atomisation par aérosol de la suspension obtenue à l'étape e") en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g") le séchage desdites gouttelettes obtenues à l'étape f") et h") l'élimination dudit tensioactif introduit dans les étapes a") et e") pour l'obtention d'un matériau mixte mésostructuré/zéolithique.

Le pourcentage volumique en composés non volatils présents dans la suspension selon l'étape e") du deuxième procédé principal de préparation du matériau mixte mésostructuré/zéolithique selon l'invention est au moins égal à 7 %, de préférence au moins égal à 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg}/ρ_{inorg} avec m_{inorg} = masse finale de la fraction inorganique sous forme d'oxyde(s) condensé(s) présente dans la particule élémentaire, c'est-à-dire AlO_{1,5} et éventuellement SiO₂ et des nanocristaux de zéolithes issus respectivement des précurseurs inorganiques et de cristaux zéolithiques se dispersant sous la forme de nanocristaux de taille nanométrique maximale égale à 1000 nm présents dans l'étape a") et l'étape e") du deuxième procédé principal de préparation du matériau mixte mésostructuré/zéolithique selon l'invention additionnés de la fraction inorganique du produit solide de l'étape c") du deuxième procédé principal de préparation du matériau mixte mésostructuré/zéolithique selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org}/ρ_{org} avec m_{org} = masse de tensioactif présente dans chaque particule sphérique élémentaire, c'est-à-dire le tensioactif présent dans l'étape a") et de l'étape e") du deuxième procédé principal de préparation du matériau mixte mésostructuré/zéolithique selon l'invention additionnés de la fraction organique du produit solide de l'étape c") du deuxième procédé principal de préparation du matériau mixte mésostructuré/zéolithique selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Conformément audit deuxième procédé principal de préparation du matériau mixte mésostructuré / zéolithique selon l'invention, la fraction du produit solide obtenu à l'étape d") et utilisée pour la mise en oeuvre de ladite étape e") représente de 1 à 100 % poids, de préférence de 1 à 80% poids et de manière encore plus préférée de 5 à 50 % poids de la quantité totale de produit solide broyé à l'étape d").

Selon un premier mode particulier de réalisation dudit deuxième procédé principal de préparation du matériau mixte mésostructuré / zéolithique selon l'invention, une partie seulement du produit solide issu de l'étape c") est broyée au cours de l'étape d") du procédé selon l'invention ; la partie non broyée n'étant généralement pas réutilisée.

Selon un deuxième mode particulier de réalisation dudit deuxième procédé principal de préparation du matériau mixte mésostructuré / zéolithique selon l'invention, l'étape h") d'élimination du tensioactif est réalisée préalablement à l'étape de broyage selon l'étape d") de telle sorte que ladite étape d") est effectuée sur un produit solide exempt de tensioactifs organiques. Les étapes a"), b"), c"), h"), d"), e") et f") devenues consécutives dans le cas particulier dudit deuxième mode de préparation du matériau mixte mésostructuré / zéolithique selon l'invention sont suivies par un nouveau cycle de séchage des gouttelettes et d'élimination du tensioactif introduit dans l'étape e") comme décrit selon les étapes g") et h").

Pour le cas particulier du matériau selon l'invention constitué de particules sphériques de diamètre D compris entre 11 et 50 µm, de préférence entre 15 et 50 µm et comprenant une matrice mésostructurée, entièrement aluminique ou de nature aluminosilicate, et des nanocristaux zéolithiques ayant une ouverture de pores comprise entre 0,2 et 2 nm, on préfère mettre en oeuvre un procédé de préparation simplifié appelé "deuxième procédé simplifié de préparation du matériau mixte mésostructuré / zéolithique selon l'invention" comprenant les étapes : a") le mélange en solution d'au moins un tensioactif, d'au moins un précurseur aluminique, éventuellement d'au moins un précurseur silicique, et de cristaux zéolithiques se dispersant sous la forme de nanocristaux de taille nanométrique maximale égale à 1000 nm dans ladite solution ; b") l'atomisation par aérosol de la solution obtenue à l'étape a") en utilisant une buse de pulvérisation qui conduit à la formation de gouttelettes liquides présentant un diamètre inférieur ou égal à 300 µm ; c") le séchage desdites gouttelettes, et h") l'élimination dudit tensioactif introduit dans l'étape a") pour l'obtention d'un matériau mixte mésostructuré/zéolithique.

Le pourcentage volumique en composés non volatils présents dans la solution selon l'étape a") du deuxième procédé simplifié de préparation du matériau mixte mésostructuré / zéolithique selon l'invention est égal à au moins 7 %, de préférence égal à au moins 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg}/ρ_{inorg} avec m_{inorg} = masse finale de la fraction inorganique sous forme d'oxyde(s) condensé(s) présente dans la particule élémentaire, c'est-à-dire AlO_{1,5} et éventuellement SiO₂ et des nanocristaux de zéolithes issus respectivement des précurseurs inorganiques et de cristaux zéolithiques se dispersant sous la forme de nanocristaux de taille nanométrique maximale égale à 1000 nm présents dans l'étape a") du deuxième procédé simplifié de préparation du matériau mixte mésostructuré / zéolithique selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org}/ρ_{org} avec m_{org} = masse de tensioactif présente dans chaque particule sphérqiue élémentaire, c'est-à-dire le tensioactif présent dans l'étape a") du deuxième procédé simplifié de préparation du matériau mixte mésostructuré / zéolithique selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Dans l'étape a") du deuxième procédé (principal et simplifié) de préparation du matériau mixte mésostructuré / zéolithique selon l'invention, on utilise des cristaux zéolithiques. Toute zéolithe cristallisée connue dans l'état de la technique qui a la propriété de se disperser en solution, par exemple en solution aquo-organique acide, sous la forme de nanocristaux de taille nanométrique maximale égale à 1000 nm convient pour la mise en oeuvre de l'étape a") du deuxième procédé principal de préparation du matériau mixte mésostructuré / zéolithique selon l'invention ou du deuxième procédé simplifié du matériau mixte mésostructuré / zéolithique selon l'invention. Lesdits cristaux zéolithiques sont synthétisés par des méthodes connues de l'Homme du métier. Les cristaux zéolithiques utilisés dans l'étape a") du deuxième procédé principal de préparation du matériau mixte mésostructuré / zéolithique selon l'invention ou du deuxième procédé simplifié du matériau mixte mésostructuré / zéolithique selon l'invention peuvent être déjà sous la forme de nanocristaux. On utilise aussi avantageusement des cristaux zéolithiques de taille supérieure à 1000 nm, par exemple comprise entre 1500 nm et 3 µm qui se dispersent en solution, par exemple en solution aquo-organique, préférentiellement en solution aquo-organique acide, sous la forme de nanocristaux de taille nanométrique maximale égale à 1000 nm. L'obtention de cristaux zéolithiques se dispersant sous la forme de nanocristaux de taille nanométrique maximale égale à 1000 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape h") du deuxième procédé de préparation (deuxième procédé principal respectivement deuxième procédé simplifié) du matériau mixte mésostructuré / zéolithique selon l'invention.
Conformément aux deux procédés principaux de préparation du matériau mixte mésostructuré / zéolithique selon l'invention respectivement aux deux procédés simplifiés de préparation du matériau mixte mésostructuré / zéolithique selon l'invention, le précurseur aluminique et éventuellement le précurseur silicique, utilisés dans les étapes a') et e') du premier procédé principal de préparation du matériau mixte mésostructuré / zéolithique selon l'invention respectivement dans l'étape a') du premier procédé simplifié de préparation du matériau mixte mésostructuré / zéolithique selon l'invention ou dans les étapes a") et e") du deuxième procédé principal de préparation du matériau mixte mésostructuré / zéolithique selon l'invention respectivement dans l'étape a") du deuxième procédé simplifié de préparation du matériau mixte mésostructuré / zéolithique selon l'invention, sont ceux déjà donnés plus haut dans la description du procédé principal de préparation selon l'invention pour la préparation d'un matériau mésostructuré ayant une matrice mésostructurée entièrement aluminique ou de nature aluminosilcate. Il en va de même pour le tensioactif utilisé dans les étapes a') et e') du premier procédé principal de préparation du matériau mixte mésostructuré / zéolithique selon l'invention respectivement dans l'étape a') du premier procédé simplifié de préparation du matériau mixte mésostructuré / zéolithique selon l'invention ou dans les étapes a") et e") du deuxième procédé principal de préparation du matériau mixte mésostructuré / zéolithique selon l'invention respectivement dans l'étape a") du deuxième procédé simplifié de préparation du matériau mixte mésostructuré / zéolithique selon l'invention. Il peut s'agir d'un tensioactif ionique ou non ionique. Un tensioactif se présentant sous la forme d'un copolymère bloc constitué de chaînes de poly(oxyde d'alkylène) est particulièrement préféré. Une description précise de cette forme - de tensioactif est donnée plus haut dans la présente description pour la préparation d'un matériau mésostructuré ayant une matrice mésostructurée entièrement aluminique ou de nature aluminosilicate (étapes a ou e du procédé principal de préparation selon l'invention).

La solution dans laquelle sont mélangés l'ensemble des réactifs selon les étapes a) et e) du procédé principal de préparation selon l'invention, respectivement selon l'étape a) du procédé simplifié) de préparation selon l'invention ou selon les étapes a') et e') du premier procédé principal de préparation du matériau mixte mésostructuré / zéolithique selon l'invention, respectivement selon l'étape a') du premier procédé simplifié de préparation du matériau mixte mésostructuré / zéolithique selon l'invention ou encore selon les étapes a") et e") du deuxième procédé principal de préparation du matériau mixte mésostructuré / zéolithique selon l'invention, respectivement selon l'étape a") du deuxième procédé simplifié de préparation du matériau mixte mésostructuré / zéolithique selon l'invention peut être acide, neutre ou basique. De préférence, ladite solution visée aux étapes citées ci-dessus est acide et présente un pH maximal égal à 3, de préférence compris entre 0 et 2. Les acides utilisés pour obtenir une solution acide de pH maximal égal à 3 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire miscible à l'eau, notamment du THF ou un alcool, dans ce dernier cas préférentiellement de l'éthanol. Ladite solution peut aussi être pratiquement organique, de préférence pratiquement alcoolique, la quantité d'eau étant telle que l'hydrolyse des précurseurs inorganiques soit assurée (quantité stoechiométrique). De manière très préférée, ladite solution dans laquelle sont mélangés au moins un précurseur aluminique, au moins un tensioactif et éventuellement au moins un précurseur silicique, est un mélange aquo-organique acide, de manière très préférée un mélange eau acide - alcool. Dans le cas préféré où la matrice du matériau selon l'invention contient de l'oxyde de silicium en plus de l'oxyde d'aluminium, les concentrations en précurseurs silicique et aluminique dans les étapes a) et e) du procédé principal de préparation selon l'invention, respectivement dans l'étape a) du procédé simplifié de préparation selon l'invention ou dans les étapes a') et e') du premier procédé principal de préparation du matériau mixte mésostructuré / zéolithique de l'invention, respectivement dans l'étape a') du premier procédé simplifié de préparation du matériau mixte mésostructuré / zéolithique selon l'invention ou dans les étapes a") et e") du deuxième procédé principal de préparation du matériau mixte mésostructuré / zéolithique selon l'invention, respectivement dans l'étape a") du deuxième procédé simplifié de préparation du matériau mixte mésostructuré / zéolithique selon l'invention sont définies par le rapport molaire Si/Al, celui-ci étant strictement inférieur à 1. Pour la préparation d'un matériau mixte mésostructuré / zéolithique selon l'invention, la quantité de nanocristaux zéolithiques dispersés dans la solution colloïdale introduite au cours des étapes a') et e') du premier procédé principal de préparation du matériau mixte mésostructuré / zéolithique selon l'invention, respectivement au cours de l'étape a') du premier procédé simplifié de préparation du matériau mixte mésostructuré / zéolithique selon l'invention ou bien la quantité des cristaux zéolithiques introduits au cours des étapes a") et e") du deuxième procédé principal de préparation du matériau mixte mésostructuré / zéolithique selon l'invention, respectivement au cours de l'étape a") du deuxième procédé simplifié de préparation du matériau mixte mésostructuré / zéolithique selon l'invention est telle que les nanocristaux zéolithiques représentent avantageusement de 0,1 à 30% poids, de préférence de 0,1 à 20% poids et de manière très préférée de 0,1 à 10% poids du matériau mixte mésostructuré / zéolithique de l'invention. La concentration initiale en tensioactif introduit dans le mélange selon les étapes a) et e) du procédé principal de préparation selon l'invention, respectivement dans le mélange selon l'étape a) du procédé simplifié selon l'invention, ou selon les étapes a') et e') du premier procédé principal de préparation du matériau mixte mésostructuré / zéolithique selon l'invention, respectivement selon l'étape a') du premier procédé simplifié de préparation du matériau mixte mésostructuré / zéolithique selon l'invention ou encore selon les étapes a") et e") du deuxième procédé principal de préparation du matériau mixte mésostructuré / zéolithique selon l'invention, respectivement selon l'étape a") du deuxième procédé simplifié de préparation du matériau mixte mésostructuré / zéolithique selon l'invention est définie par cₒ et cₒ est définie par rapport à la concentration micellaire critique (c_{mc}) bien connue de l'Homme du métier. La c_{mc} est la concentration limite au delà de laquelle se produit le phénomène d'auto-arrangemant des molécules du tensioactif dans la solution visée dans chacun des 6 procédés. La concentration cₒ peut être inférieure, égale ou supérieure à la c_{mc}, de préférence elle est inférieure à la c_{mc}. Dans une mise en oeuvre préférée de chacun des six procédés selon l'invention (procédé principal de préparation selon l'invention et procédé simplifié de préparation selon l'invention, premier procédé principal de préparation du matériau mixte mésostructuré / zéolithique selon l'invention et premier procédé simplifié de préparation du matériau mixte mésostructuré / zéolithique selon l'invention, deuxième procédé principal de préparation du matériau mixte mésostructuré / zéolithique selon l'invention et deuxième procédé simplifié de préparation du matériau mixte mésostructuré / zéolithique selon l'invention), la concentration cₒ est inférieure à la c_{mc} et ladite solution visée à chacune des étapes a), e), a'), e'), a") et e") de chacun des six procédés de préparation selon l'invention est un mélange eau acide - alcool.
Dans le cas où la solution visée à chacune des étapes a), e), a'), e'), a") et e") de chacun des six procédés de préparation selon l'invention est un mélange eau-solvant organique, de préférence acide, il est préféré au cours de chacune desdites étapes a), e), a'), e'), a") et e") de chacun des six procédés de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de chacune des étapes b), f), b'), f'), b") et f") de chacun des six procédés de préparation selon l'invention par la technique d'aérosol induise un phénomène de micellisation ou d'auto-assemblage conduisant à la mésostructuration de la matrice du matériau selon l'invention. Dans le cas de la préparation d'un matériau mixte mésostructuré / zéolithique, la mésostructuration de la matrice du matériau se produit autour des nanocristaux zéolithiques lesquels demeurent inchangés dans leur forme et leur taille au cours des étapes b'), f') et c'), g') du premier procédé principal de préparation du matériau mixte mésostructuré / zéolithique selon l'invention respectivement au cours des étapes b') et c') du premier procédé simplifié de préparation du matériau mixte mésostructuré / zéolithique selon l'invention ou encore au cours des étapes b"), f") et c"), g") du deuxième procédé principal de préparation du matériau mixte mésostructuré / zéolithique selon l'invention respectivement au cours des étapes b") et g") du deuxième procédé simplifié de préparation du matériau mixte mésostructuré / zéolithique selon l'invention. Lorsque cₒ<c_{mc}, la mésostructuration de la matrice du matériau selon l'invention, préparé selon l'un des six procédés de l'invention, est consécutive à une concentration progressive, au sein de chaque gouttelette, du précurseur aluminique, du tensioactif, et éventuellement du précurseur silicique jusqu'à une concentration en tensioactif c>c_{mc} résultant d'une évaporation de la solution aquo-organique, préférentiellement acide.
De manière générale, l'augmentation de la concentration conjointe du précurseur aluminique et éventuellement du précurseur silicique, et du tensioactif provoque la précipitation du précurseur aluminique et éventuellement du précurseur silicique, hydrolysé(s), autour du tensioactif auto-organisé et en conséquence la structuration du matériau selon l'invention. Les interactions phases inorganique / inorganique, phases organique / organique et phases organique / inorganique conduisent par un mécanisme d'auto-assemblage coopératif à la condensation du précurseur aluminique hydrolysé et éventuellement du précurseur silicique hydrolysé autour du tensioactif auto-organisé. Dans le cas de la préparation d'un matériau mixte mésostructuré/zéolithique, les nanocristaux zéolitiques se retrouvent piégés, lors dudit phénomène d'auto-assemblage, dans la matrice à base d'oxyde d'aluminium, mésostructurée, comprise dans chacune des particules sphériques élémentaires constituant le matériau de l'invention.
L'emploi de buses de pulvérisation est particulièrement avantageux pour contraindre les réactifs présents dans la solution initiale à interagir entre eux, aucune perte de matière hormis les solvants n'étant possible, la totalité des éléments aluminium, éventuellement silicium et éventuellement les nanocristaux zéolithiques, présents initialement étant ainsi parfaitement conservé(s) tout au long de chacun des trois procédés selon l'invention au lieu d'être éliminé lors des étapes de filtration et de lavages rencontrées dans des procédés de synthèse classiques connus de l'Homme du métier.

L'obtention de particules élémentaires sphériques de diamètre D tel que 10 < D (µm) ≤ 100 au moyen du procédé "EISA", en particulier par la technique aérosol, spécifique de l'invention oblige à une connaissance et une maîtrise accrues des paramètres opératoires de synthèse, essentiellement au niveau des étapes a), b), e) et f) du procédé principal selon l'invention ou des étapes a) et b) du procédé simplifié selon l'invention ou des étapes a'), b'), e') et f') du premier procédé principal de préparation du matériau mixte mésostructuré/zéolithique selon l'invention ou des étapes a') et b') du premier procédé simplifié de préparation du matériau mixte mésostructuré/zéolithique selon l'invention ou des étapes a"), b"), e") et f") du deuxième procédé principal de préparation du matériau mixte mésostructuré/zéolithique selon l'invention ou des étapes a") et b") du deuxième procédé simplifié de préparation du matériau mixte mésostructuré/zéolithique selon l'invention afin de maintenir le processus de mésostructuration par auto-assemblage du tensioactif conjointement aux réactions d'hydrolyse / condensation des divers précurseurs inorganiques. En effet, la production de gouttelettes de diamètre inférieur ou égal à 300 µm conduit à des cinétiques d'évaporation de la solution ou de la suspension aquo-organique d'autant plus lentes que la gouttelette est grosse (car proportionnelles au carré du diamètre de la goutte à évaporer). Si le temps d'évaporation total est plus lent que le temps de condensation de la matière inorganique à la périphérie de la goutte, il se forme une couche de matériau condensé à l'interface d'évaporation constituant une barrière supplémentaire à l'évaporation. Si cette couche supplémentaire devient rigide avant que suffisamment de solvant, c'est-à-dire d'eau éventuellement additionnée de solvant organique, se soit évaporé, le rapport du volume des constituants polaires sur le volume des constituants apolaires dans les mélanges selon les étapes a) et e) du procédé principal de l'invention ou dans le mélange selon l'étape a) du procédé simplifié selon l'invention ou dans les mélanges selon les étapes a') et e') du premier procédé principal de préparation du matériau mixte mésostructuré/zéolithique selon l'invention ou dans le mélange selon l'étape a') du premier procédé simplifié de préparation du matériau mixte mésostructuré/zéolithique selon l'invention ou dans les mélanges selon les étapes a") et e") du deuxième procédé principal de préparation du matériau mixte mésostructuré/zéolithique selon l'invention ou dans le mélange selon l'étape a") du deuxième procédé simplifié de préparation du matériau mixte mésostructuré/zéolithique selon l'invention noté Vₚₒₗ/Vₐₚₒₗ = (V_{inorg} + Vₛₒₗᵥₐₙₜ + V_{org polaire})/(V_{org hydrophobe}), paramètre critique qui conditionne l'apparition d'une mésostructuration, est variable entre les zones "pellicule rigide de surface" et "coeur de la particule" (avec V_{inorg} = m_{inorg}/p_{inorg} tel que défini plus haut dans la présente description et V_{org polaire} + V_{org hydrophobe} = V_{org} tel que défini également plus haut dans la présente description et Vₛₒₗᵥₐₙₜ = volume total de solvant, le solvant étant formé d'eau et éventuellement d'un solvant organique, V_{org polaire}= volume des parties polaires des réactifs organiques, V_{org hydrophobe} = volume des parties apolaires des réactifs organiques). Au coeur, les éléments présente - doivent alors accommoder la mésostructuration à un volume total (défini par le volume inscrit dans la croûte rigide) supérieur à la valeur optimale. Si le rapport Vₚₒₗ/Vₐₚₒₗ est trop éloigné de la valeur optimale de mésostructuration, l'homogénéité de mésostructure des particules produites se détériore et peut disparaître pour former des particules constituées d'une croûte bien mésostructurée et d'un coeur non mésostructuré (amorphe ou bien résultant d'une décomposition spinodale selon les éléments les constitutifs et les solvants employés). Afin d'éviter ce phénomène rédhibitoire pour l'élaboration du matériau selon l'invention, il convient dans les étapes b) et f) du procédé principal selon l'invention respectivement dans l'étape b) du procédé simplifié selon l'invention, dans les étapes b') et f') du premier procédé principal de préparation du matériau mixte mésostructuré/zéolithique selon l'invention respectivement dans l'étape b') du premier procédé simplifié de préparation du matériau mixte mésostructuré/zéolithique selon l'invention, dans les étapes b") et f") du deuxième procédé principal de préparation du matériau mixte mésostructuré/zéolithique selon l'invention respectivement dans l'étape b") du deuxième procédé simplifié de préparation du matériau mixte mésostructuré/zéolithique selon l'invention, de limiter le volume de solvant à évaporer, autrement dit, de concentrer les solutions aérosolées afin de travailler préférentiellement avec une valeur Cₒ proche ou supérieure à la C_{mc}. Ceci se traduit par la présence de composés non volatils dans la suspension selon l'étape e) du procédé principal de préparation selon l'invention et dans la solution selon l'étape a) du procédé simplifié de préparation selon l'invention, selon l'étape e') du premier procédé principal de préparation du matériau mixte mésostructuré/zéolithique selon l'invention et dans la solution selon l'étape a') du premier procédé simplifié de préparation du matériau mixte mésostructuré/zéolithique selon l'invention, selon l'étape e") du deuxième procédé principal de préparation du matériau mixte mésostructuré/zéolithique selon l'invention et dans la solution selon l'étape a") du deuxième procédé simplifié de préparation du matériau mixte mésostructuré/zéolithique selon l'invention, dans une quantité telle que le pourcentage volumique desdits composés présents dans ladite suspension / solution est d'au moins 7%. Le maximum de ce pourcentage volumique est propre à chaque système et est limité principalement par trois critères : (i) le manque de stabilité dans le temps des solutions obtenues aux étapes a) et e) du procédé principal de l'invention respectivement à l'étape a) du procédé simplifié selon l'invention, des solutions obtenues aux étapes a') et e') du premier procédé principal de préparation du matériau mixte mésostructuré/zéolithique selon l'invention respectivement à l'étape a') du premier procédé simplifié de préparation du matériau mixte mésostructuré/zéolithique selon l'invention, des solutions obtenues aux étapes a") et e") du deuxième procédé principal de préparation du matériau mixte mésostructuré/zéolithique selon l'invention respectivement à l'étape a") du deuxième procédé simplifié de préparation du matériau mixte mésostructuré/zéolithique selon l'invention, (ii) la précipitation spontanée de la solution à trop forte concentration (soit par manque de solubilité de l'un ou plusieurs constituants, soit par réaction de condensation des constituants inorganiques présents en solutions obtenues aux étapes a) et e) du procédé principal de l'invention respectivement à l'étape a) du procédé simplifié selon l'invention, aux étapes a') et e') du premier procédé principal de préparation du matériau mixte mésostructuré/zéolithique selon l'invention respectivement à l'étape a') du premier procédé simplifié de préparation du matériau mixte mésostructuré/zéolithique selon l'invention, aux étapes a") et e") du deuxième procédé principal de préparation du matériau mixte mésostructuré/zéolithique selon l'invention respectivement à l'étape a") du deuxième procédé simplifié de préparation du matériau mixte mésostructuré/zéolithique selon l'invention), et (iii) les propriétés rhéologiques des solutions obtenues aux étapes a) et e) du procédé principal de l'invention respectivement à l'étape a) du procédé simplifié selon l'invention, aux étapes a') et e') du premier procédé principal de préparation du matériau mixte mésostructuré/zéolithique selon l'invention respectivement à l'étape a') du premier procédé simplifié de préparation du matériau mixte mésostructuré/zéolithique selon l'invention, aux étapes a") et e") du deuxième procédé principal de préparation du matériau mixte mésostructuré/zéolithique selon l'invention respectivement à l'étape a") du deuxième procédé simplifié de préparation du matériau mixte mésostructuré/zéolithique selon l'invention qui peuvent devenir inadaptées à la formation des gouttelettes par les buses de pulvérisations (viscosité trop élevée par exemple).

Les étapes b'), f'), c'), g'), d') et h') selon le premier procédé principal de préparation du matériau mixte mésostructuré / zéolithique selon l'invention respectivement les étapes b'), c') et h') selon le premier procédé simplifié de préparation du matériau mixte mésostructuré / zéolithique selon l'invention ou les étapes b"), f"), c"), g"), d") et h") selon le deuxième procédé principal de préparation du matériau mixte mésostructuré / zéolithique selon l'invention respectivement les étapes b") c") et h") selon le deuxième procédé simplifié de préparation du matériau mixte mésostructuré / zéolithique selon l'invention sont réalisées dans les mêmes conditions opératoires que celles dans lesquelles les étapes b), f), c), g), d) et h) du procédé principal de préparation selon l'invention respectivement les étapes b), c) et h) du procédé simplifié de préparation selon l'invention sont réalisées.
Le matériau mésostructuré de l'invention, présentant éventuellement des nanocristaux de zéolithes piégés au sein de la matrice mésostructurée, est caractérisé par plusieurs techniques d'analyses et notamment par Diffraction des Rayons X aux bas angles (DRX aux bas angles), par Diffraction des rayons X aux grands angles (DRX aux grands angles), par Volumétrie à l'azote (BET), par Microscopie électronique à transmission (MET), par microscopie électronique à balayage (MEB) et par Spectrométrie d'émission à plasma induit par haute fréquence (ICP).
La technique de Diffraction des Rayons X aux bas angles (valeurs de l'angle 2θ comprises entre 0,5 et 6°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ₍ₕₖₗ₎ * sin (θ) = n * λ Cette indexation permet alors la détermination des paramètres de maille (abc) du réseau direct, la valeur de ces paramètres étant fonction de la structure hexagonale, cubique, cholestérique, lamellaire, bicontinue ou vermiculaire obtenue. Pour exemple, le diffractogramme de Rayons X aux bas angles d'un matériau mésostructuré constitué de particules sphériques élémentaires comportant une matrice aluminosilicate et obtenu selon l'un des six procédés de préparation décrits ci-dessus via l'emploi du copolymère à bloc particulier dénommé poly(oxyde d'éthylène)₂₀-poly(oxyde de propylène)₇₀-poly(oxyde d'éthylène)₂₀ (PEO₂₀-PPO₇₀-PEO₂₀ ou Pluronic 123) présente un pic de corrélation parfaitement résolu correspondant à la distance de corrélation entre pores d caractéristique d'une structure de type vermiculaire et définie par la relation de Bragg 2 d ₍ₕₖₗ₎ * sin (θ) = n * λ. La technique de Diffraction des Rayons X aux grands angles (valeurs de l'angle 2θ comprises entre 5 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux mixtes mésostructuré / zéolithique car elle est tout particulièrement adaptée à la caractérisation structurale des nanocristaux zéolithiques présents dans chacune des particules sphériques élémentaires constituant le matériau mixte mésostructuré / zéolithique selon l'invention. En particulier, elle permet d'accéder à la taille des pores des nanocristaux zéolithiques. Pour exemple, les diffractogrammes de Rayons X grands et bas angles d'un matériau mixte mésostructuré / zéolithique obtenu selon le premier ou le deuxième procédé de préparation d'un matériau mixte mésostructuré / zéolithique selon l'invention comprenant des nanocristaux de zéolithe du type ZSM-5 (MFI), la matrice mésostructurée étant de nature aluminosilicate et obtenue via l'emploi du copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) présentent respectivement le diffractogramme associé au groupe de symétrie Pnma (N°62) de la zéolithe ZSM-5 aux grands angles et un pic de corrélation parfaitement résolu aux petits angles associé à la structure de type vermiculaire de la matrice mésostructurée qui correspond à une distance d de corrélation entre pores. La valeur de l'angle obtenue sur le diffractogramme RX permet de remonter à la distance de corrélation d selon la loi de Bragg : 2 d ₍ₕₖₗ₎ * sin (θ) = n * λ. Les valeurs des paramètres de maille a, b, c obtenues pour la caractérisation des nanocristaux de zéolithes sont cohérents avec les valeurs obtenues pour une zéolithe de type ZSM-5 (MFI) bien connues de l'homme de l'art ("Collection of simulated XRD powder patterns for zeolites", 4th revised Edition, 2001, M. M. J. Treacy, J. B. Higgins).
La volumétrie à l'azote correspondant à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique « The Journal of American Society", 1938, 60, 309. La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH ainsi obtenue est décrite dans le périodique "The Journal of American Society" , 1951, 73, 373 écrit par E. P. Barrett, L. G. Joyner et P. P. Halenda. Dans l'exposé qui suit, le diamètre des mésopores φ de la matrice mésostructurée donné correspond au diamètre moyen à l'adsorption d'azote défini comme étant un diamètre tel que tous les pores inférieurs à ce diamètre constituent 50% du volume poreux (Vp) mesuré sur la branche d'adsorption de l'isotherme azote. De plus, l'allure de l'isotherme d'adsorption d'azote et de la boucle d'hystérésis peut renseigner sur la nature de la mésoporosité et sur la présence éventuelle de microporosité liée essentiellement aux nanocristaux zéolithiques lorsqu'ils sont présents dans la matrice oxyde mésostructurée. Pour exemple, l'isotherme d'adsorption d'azote relative à un matériau aluminosilicate mésostructuré selon l'invention et obtenu grâce au procédé principal de préparation selon l'invention en utilisant comme tensioactif le copolymère à bloc particulier dénommé poly(oxyde d'éthylène)₂₀-poly(oxyde de propylène)₇₀poly(oxyde d'éthylène)₂₀ (PEO₂₀-PPO₇₀-PEO₂₀ ou Pluronic 123 ou P123) est caractérisée par une isotherme d'adsorption de classe IV et une boucle d'hystérésis de type H1, la courbe de distribution poreuse associée étant quant à elle représentative d'une population de mésopores de taille uniforme centrée dans une gamme de 4 à 10 nm. Pour exemple d'un matériau mixte mésostructuré / zéolithique, l'isotherme d'adsorption d'azote d'un tel matériau obtenu selon l'un des six procédés de préparation d'un matériau mixte mésostructuré / zéolithique selon l'invention et comprenant des nanocristaux de zéolithe du type ZSM-5 (MFI), la matrice mésostructurée étant de nature aluminosilicate et obtenue via l'emploi du copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127), présente pour des faibles valeurs de P/P0 (où P0 est la pression de vapeur saturante à la température T) une isotherme de type I caractéristique d'un matériau microporeux et pour les valeurs de P/P0 plus élevées une isotherme de type IV ainsi qu'une boucle d'hystérésis de type H1, la courbe de distribution poreuse associée étant quant à elle représentative d'une population de mésopores de taille uniforme centrée dans une gamme de 4 à 10 nm.
Concernant la matrice mésostructurée, la différence entre la valeur du diamètre des pores φ et le paramètre de maille a défini par DRX aux bas angles comme décrit ci-dessus permet d'accéder à la grandeur e où e = a - φ et est caractéristique de l'épaisseur des parois amorphes de la matrice mésostructurée constituant chacune des particules sphériques du matériau selon l'invention. Ledit paramètre de maille a est relié à la distance d de corrélation entre pores par un facteur géométrique caractéristique de la géométrie de la phase. Pour exemple, dans le cas d'une maille hexagonale e = a - φ avec a = 2*d/√3, dans le cas d'une structure vermiculaire e = d - φ.
L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET sont réalisées à partir de coupes microtomes de l'échantillon afin de visualiser une section d'une particule sphérique élémentaire du matériau selon l'invention. Pour exemple, les images MET obtenues pour un matériau aluminosilicate mésostructuré selon l'invention et obtenu grâce à l'un des six procédés de préparation selon l'invention en utilisant le copolymère à bloc particulier dénommé Pluronic 123 présentent des particules élémentaires sphériques ayant une mésostructure vermiculaire, la matière étant définie par les zones sombres. L'analyse de l'image permet également d'accéder aux paramètres d, φ et e caractéristiques de la matrice mésostructurée définis précédemment. Pour exemple d'un matériau mixte mésostructuré/zéolithique, les images MET obtenues pour un tel matériau obtenu selon l'un des six procédés de préparation selon l'invention comprenant des nanocristaux de zéolithe du type ZSM-5 (MFI), la matrice mésostructurée étant de nature aluminosilicate et obtenue via l'emploi du copolymère à bloc particulier dénommé P123 présentent au sein d'une même particule sphérique une mésostructure vermiculaire (la matière étant définie par des zones sombres) au sein de laquelle sont visualisés des objets plus ou moins sphériques opaques représentant les nanocristaux zéolithiques piégés dans la matrice mésostructurée. L'analyse de l'image permet également d'accéder aux paramètres d, φ et e, caractéristiques de la matrice mésostructurée définis précédemment. Il est possible de visualiser également sur ce même cliché les plans réticulaires des nanocristaux au lieu des objets opaques cités précédemment et de remonter ainsi à la structure de la zéolithe.
La morphologie et la distribution en taille des particules élémentaires ont été établies par analyse de photos obtenues par microscopie électronique à balayage (MEB).
La structure de la matrice mésostructurée constituant chacune des particules du matériau selon l'invention peut être cubique, vermiculaire, cholestérique, lamellaire, bicontinue ou hexagonale en fonction de la nature du tensioactif choisi comme agent structurant. De préférence, il s'agit d'une structure vermiculaire.

La présente invention concerne l'utilisation du matériau mésostructuré selon l'invention comme adsorbant pour le contrôle de la pollution ou comme tamis moléculaire pour la séparation. La présente invention a donc également pour objet un adsorbant comprenant le matériau mésostructuré selon l'invention. Il est également avantageusement utilisé comme solide acide pour catalyser des réactions, par exemple celles intervenant dans les domaines du raffinage et de la pétrochimie.

Lorsque le matériau mésostructuré selon l'invention est utilisé comme catalyseur, ce matériau peut être associé à une matrice inorganique qui peut être inerte ou catalytiquement active et à une phase métallique. La matrice inorganique peut être présente simplement comme liant pour maintenir ensemble les particules dudit matériau sous les différentes formes connues des catalyseurs (extrudés, pastilles, billes, poudres) ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, de silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active. Ledit matériau de la présente invention peut aussi être associé à au moins une zéolithe et jouer le rôle de phase active principale ou d'additif. La phase métallique peut être introduite intégralement sur ledit matériau de l'invention. Elle peut être également introduite intégralement sur la matrice inorganique ou encore sur l'ensemble matrice inorganique - solide mésostructuré par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.
Les compositions catalytiques comportant le matériau de la présente invention conviennent de façon générale à la mise en oeuvre des principaux procédés de transformation des hydrocarbures et des réactions de synthèse de composés organiques.

Les compositions catalytiques comportant le matériau de l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage, de reformage, d'hydrogénation et de déshydrogénation, d'oxydation, d'halogénation, d'hydrocraquage, d'hydroconversion, d'hydrotraitement, d'hydrodésulfuration et d'hydrodéazotation, d'élimination catalytique des oxydes d'azote, lesdites réactions impliquant des charges comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels.

L'invention est illustrée au moyen des exemples qui suivent.

### Exemple 1 (invention) : préparation d'un matériau aluminosilicate mésostructuré à forte teneur en aluminium de rapport molaire Si/Al = 0,5 obtenu à partir du procédé principal selon l'invention.

3,4 kg de trichlorure d'aluminium hexahydraté sont ajoutés à une solution contenant 10 kg d'éthanol, 5 l d'eau, 36 ml d'HCl et 1,3 kg de tensioactif CTAB. L'ensemble est laissé sous agitation à température ambiante jusqu'à dissolution complète du précurseur aluminique. 1,4 kg de tétraéthylorthosilicate (TEOS) sont alors additionnés. Après une agitation de 10 min à température ambiante, l'ensemble est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus conformément à l'étape c) du procédé principal de préparation de l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" comme précédemment et les gouttelettes séchées à 100°C selon le protocole décrit dans l'exposé de l'invention ci-dessus, conformément à l'étape g) du procédé principal de préparation de l'invention. La poudre récoltée dans un filtre à manche est alors calcinée sous air pendant 5 h à T = 550°C de manière à éliminer le tensioactif CTAB. Le pourcentage volumique en composés non volatils présents dans la suspension avant la deuxième atomisation est égal à 8,4 %. Le solide est caractérisé par DRX aux bas angles, par Volumétrie à l'azote, par MET, par MEB et par ICP. L'analyse MET montre que le matériau final présente une mésoporosité organisée caractérisée par une structure vermiculaire. L'analyse par Volumétrie à l'azote conduit à une surface spécifique du matériau final de S_{BET} = 510 m²/g et à un diamètre mésoporeux de φ = 2,5 nm. L'analyse DRX aux petits angles conduit à la visualisation d'un pic de corrélation à l'angle 2θ = 2,2. La relation de Bragg 2 d * sin (1,1) = 1,5406 permet de calculer la distance d de corrélation entre les pores de la matrice mésotructurée, soit d = 4,0 nm. L'épaisseur des parois de la matrice mésostructurée définie par e = d - φ est donc de e = 1,5 nm. L'analyse ICP donne un rapport molaire Si/Al égal à 0,5. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm,

### Exemple 2 (invention) : préparation d'un matériau aluminosilicate mésostructuré à forte teneur en aluminium de rapport molaire Si/Al = 0,9 obtenu à partir du procédé principal selon l'invention.

2,6 kg de trichlorure d'aluminium hexahydraté sont ajoutés à une solution contenant 11 kg d'éthanol, 5 l d'eau, 36 ml d'HCl et 1,4 kg de tensioactif P123. L'ensemble est laissé sous agitation à température ambiante jusqu'à dissolution complète du précurseur aluminique. 2 kg de tétraéthylorthosilicate (TEOS) sont alors additionnés. Après une agitation de 18 heures à température ambiante, l'ensemble est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus, conformément à l'étape c) du procédé principal selon l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée et les gouttelettes séchées à 100°C selon le protocole décrit dans l'exposé de l'invention ci-dessus, conformément à l'étape g) du procédé principal selon l'invention. La poudre récoltée dans un filtre à manche est alors calcinée sous air pendant 5 h à T = 550°C de manière à éliminer le tensioactif P123. Le pourcentage volumique en composés non volatils présents dans la suspension avant la deuxième atomisation est égal à 9,8 %. Le solide est caractérisé par DRX aux bas angles, par Volumétrie à l'azote, par MET, par MEB et par ICP. L'analyse MET montre que le matériau final présente une mésoporosité organisée caractérisée par une structure vermiculaire. L'analyse par Volumétrie à l'azote conduit à une surface spécifique du matériau final de S_{BET} = 280 m²/g et à un diamètre mésoporeux de 5,6 nm. L'analyse DRX aux petits angles conduit à la visualisation d'un pic de corrélation à l'angle 2θ = 0,64. La relation de Bragg 2 d * sin (0,32) = 1,5406 permet de calculer la distance d de corrélation entre les pores de la matrice mésostructurée, soit d = 13,1 nm. L'épaisseur des parois de la matrice mésostructurée définie par e = d - φ est donc de e = 7,5 nm. L'analyse ICP donne un rapport molaire Si/Al égal à 0,9. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

### Exemple 3 (invention) : préparation d'un matériau aluminosilicate mésostructuré à forte teneur en aluminium comprenant des nanocristaux de zéolithes de type ZSM-5 (MFI) (Si/Al molaire = 100, 10% poids du matériau final) piégés dans une matrice aluminosilicate mésostructurée (Si/Al molaire = 0,9) obtenu à partir du premier procédé principal de préparation du matériau mixte mésostructuré / zéolithique selon l'invention.

140 g de tri-sec-butoxyde d'aluminium sont ajoutés à une solution contenant 3,5 l d'hydroxyde de tétrapropylammonium (TPAOH), 10 g de soude NaOH et 4,3 l d'eau. Après dissolution de l'alcoxyde d'aluminium, 6 kg de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de ZSM-5 de 135 nm. Cette solution est centrifugée à 20000 rpm pendant 30 minutes. Le solide est redispersé dans de l'eau puis centrifugé de nouveau à 20000 rpm pendant 30 minutes. Ce lavage est effectué deux fois. Les nanocristaux forment un gel séché à l'étuve une nuit à 60°C. 460 mg de ces cristaux sont redispersés dans une solution contenant 11 kg d'éthanol, 5 l d'eau, 2 kg de TEOS, 2,6 kg de AlCl₃, 6H₂O, 36 ml d'HCl et 1,4 kg de tensioactif P123 par agitation aux ultra-sons pendant 24 heures. L'ensemble est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus, conformément à l'étape c') du premier procédé principal de préparation selon l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" comme précédemment et les gouttelettes séchées à 100°C selon le protocole décrit dans l'exposé de l'invention ci-dessus, conformément à l'étape g') du premier procédé principal de préparation selon l'invention. La poudre récoltée dans un filtre à manche est alors calcinée sous air pendant 5 h à T = 550°C de manière à éliminer le tensioactif P123. Le pourcentage volumique en composés non volatils présents dans la suspension avant la deuxième atomisation est égal à 9,8 %. Le solide est caractérisé par DRX aux bas angles, par Volumétrie à l'azote, par MET, par MEB et par ICP. L'analyse MET montre que le matériau final est constitué de nanocristaux de zéolithe ZSM-5 piégés dans une matrice aluminosilcate à mésoporosité organisée caractérisée par une structure vermiculaire. L'analyse par Volumétrie à l'azote conduit à une surface spécifique du matériau final de S_{BET} = 310 m²/g et à un diamètre mésoporeux caractéristique de la matrice mésostructurée aluminosilcate de φ = 5,6 nm. L'analyse DRX aux grands angles conduit à l'obtention du diffractogramme caractéristique de la zéolithe ZSM-5 (taille des micropores de l'ordre de 0,55 nm). L'analyse DRX aux petits angles conduit à la visualisation d'un pic de corrélation associé à la symétrie vermiculaire de la matrice mésostructurée. La relation de Bragg donne 2 d * sin (0,32) = 1,5406, soit d = 13,1 nm. L'épaisseur des parois amorphes de la matrice mésostructurée aluminosilicate définie par e = d - φ est donc de e = 7,5 nm. L'analyse ICP donne un rapport molaire Si/Al de la matrice égal à 0,9. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

## Revendications

1. Matériau mésostructuré constitué d'au moins deux particules sphériques élémentaires, chacune desdites particules comprenant une matrice mésostructurée à base d'oxyde d'aluminium, ladite matrice ayant un diamètre de pores compris entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaires ayant un diamètre D supérieur à 10 µm et inférieur ou égal à 100 µm (10 < D (µm) ≤ 100).

2. Matériau selon la revendication 1 tel que lesdites particules sphériques ont un diamètre D compris entre 11 et 70 µm.

3. Matériau selon la revendication 2 tel que lesdites particules sphériques ont un diamètre D compris entre 11 et 50 µm.

4. Matériau selon la revendication 3 tel que lesdites particules sphériques ont un diamètre D compris entre 15 et 50 µm.

5. Matériau selon l'une des revendications 1 à 4 tel que ladite matrice mésostructurée à base d'oxyde d'aluminium comprend de l'oxyde de silicium.

6. Matériau selon la revendication 5 tel que ladite matrice mésostructurée présente un rapport molaire Si/Al strictement inférieur à 1.

7. Matériau selon l'une des revendications 1 à 6 tel que ladite matrice mésostructurée présente une structure cubique, vermiculaire, cholestérique, lamellaire, bicontinue ou hexagonale.

8. Matériau selon l'une des revendications 1 à 7 tel qu'il présente une surface spécifique comprise entre 100 et 1200 m²/g.

9. Matériau selon l'une des revendications 1 à 8 tel que chacune desdites particules sphériques comprend des nanocristaux zéolithiques ayant une ouverture de pores comprise entre 0,2 et 2 nm.

10. Matériau selon la revendication 9 tel que lesdits nanocristaux zéolithiques comprennent au moins une zéolithe choisie parmi les zéolithes de type structural MFI, BEA, FAU et LTA.

11. Matériau selon la revendication 9 ou 10 tel que lesdits nanocristaux zéolithiques comprennent au moins une zéolithe entièrement silicique.

12. Matériau selon la revendication 9 ou 10 tel que lesdits nanocristaux zéolithiques comprennent au moins une zéolithe contenant du silicium et de l'aluminium.

13. Procédé de préparation d'un matériau mésostructuré selon l'une des revendications 1 à 8 comprenant a) le mélange en solution d'au moins un tensioactif, d'au moins un précurseur aluminique et éventuellement d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, éventuellement d'au moins un précurseur silicique et d'au moins une fraction du produit solide obtenu à l'étape d) de manière à former une suspension dans laquelle le pourcentage volumique en composés non volatils est au moins égal à 7 % ; f) l'atomisation par aérosol de la suspension obtenue à l'étape e) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g) le séchage desdites gouttelettes obtenues à l'étape f) et h) l'élimination dudit tensioactif introduit dans lesdites étapes a) et e) pour l'obtention d'un matériau à porosité mésostructurée.

14. Procédé de préparation d'un matériau mésostructuré selon l'une des revendications 9 à 12 comprenant a₀) la synthèse, en présence d'au moins un agent structurant, de nanocristaux zéolithiques de taille nanométrique maximale égale à 1000 nm afin d'obtenir une solution colloïdale dans laquelle sont dispersés lesdits nanocristaux ; a') le mélange en solution d'au moins un tensioactif, d'au moins un précurseur aluminique et éventuellement d'au moins un précurseur silicique, et d'au moins une solution colloïdale obtenue selon a₀) ; b') l'atomisation par aérosol de la solution obtenue à l'étape a') en utilisant une buse de pulvérisation qui conduit à la formation de gouttelettes liquides présentant un diamètre inférieur ou égal à 300 µm ; c') le séchage desdites gouttelettes, d') le broyage du produit solide obtenu à l'étape c') ; e') le mélange en solution d'au moins un tensioactif, d'au moins un précurseur aluminique et éventuellement d'au moins un précurseur silicique, d'au moins une solution colloïdale obtenue selon a₀) et d'au moins une fraction du produit solide obtenu à l'étape d') de manière à former une suspension dans laquelle le pourcentage volumique en composés non volatils est au moins égal à 7 % ; f) l'atomisation par aérosol de la suspension obtenue à l'étape e') en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g') le séchage desdites gouttelettes obtenues à l'étape f) et h') l'élimination dudit tensioactif introduit dans les étapes a') et e') pour l'obtention d'un matériau mixte mésostructuré/zéolithique.

15. Procédé de préparation d'un matériau mésostructuré selon l'une des revendications 9 à 12 comprenant a") le mélange en solution d'au moins un tensioactif, d'au moins un précurseur aluminique, éventuellement d'au moins un précurseur silicique, et de cristaux zéolithiques se dispersant sous la forme de nanocristaux de taille nanométrique maximale égale à 1000 nm dans ladite solution ; b") l'atomisation par aérosol de la solution obtenue à l'étape a") en utilisant une buse de pulvérisation qui conduit à la formation de gouttelettes liquides présentant un diamètre inférieur ou égal à 300 µm ; c") le séchage desdites gouttelettes, d") le broyage du produit solide obtenu à l'étape c") ; e") le mélange en solution d'au moins un tensioactif, d'au moins un précurseur aluminique, éventuellement d'au moins un précurseur silicique, de cristaux zéolithiques se dispersant sous la forme de nanocristaux de taille nanométrique maximale égale à 1000 nm dans ladite solution et d'au moins une fraction du produit solide obtenu à l'étape d") de manière à former une suspension dans laquelle le pourcentage volumique en composés non volatils est au moins égal à 7 % ; f") l'atomisation par aérosol de la suspension obtenue à l'étape e") en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g") le séchage desdites gouttelettes obtenues à l'étape f") et h") l'élimination dudit tensioactif introduit dans les étapes a") et e") pour l'obtention d'un matériau mixte mésostructuré/zéolithique.

## Claims

1. A mesostructured material consisting of at least two elementary spherical particles, each one of said particles comprising a mesostructured matrix based on aluminium oxide, said matrix having a pore diameter ranging between 1.5 and 30 nm, and an aluminium oxide content representing more than 46 wt.% of the mass of said matrix, which has amorphous walls of thickness ranging between 1 and 30 nm, said elementary spherical particles having a diameter D greater than 10 µm and less than or equal to 100 µm (10 < D (µm) ≤ 100).

2. A material as claimed in claim 1, such that said spherical particles have a diameter D ranging between 11 and 70 µm.

3. A material as claimed in claim 2, such that said spherical particles have a diameter D ranging between 11 and 50 µm.

4. A material as claimed in claim 3, such that said spherical particles have a diameter D ranging between 15 and 50 µm.

5. A material as claimed in any one of claims 1 to 4, such that said mesostructured matrix based on aluminium oxide comprises silicon oxide.

6. A material as claimed in claim 5, such that said mesostructured matrix has a Si/Al molar ratio strictly below 1.

7. A material as claimed in any one of claims 1 to 6, such that said mesostructured matrix has a cubic, vermicular, cholesteric, lamellar, bicontinuous or hexagonal structure.

8. A material as claimed in any one of claims 1 to 7, such that it has a specific surface area ranging between 100 and 1200 m²/g.

9. A material as claimed in any one of claims 1 to 8, such that each one of said spherical particles comprises zeolite nanocrystals having a pore opening ranging between 0.2 and 2 nm.

10. A material as claimed in claim 9, wherein said zeolite nanocrystals comprise at least one zeolite selected from among the zeolites of MFI, BEA, FAU and LTA structural type.

11. A material as claimed in claim 9 or 10, wherein said zeolite nanocrystals comprise at least one entirely silicic zeolite.

12. A material as claimed in claim 9 or 10, wherein said zeolite nanocrystals comprise at least one zeolite containing silicon and aluminium.

13. A method for preparing a mesostructured material as claimed in any one of claims 1 to 8, comprising: a) mixing into a solution at least one surfactant, at least one aluminic precursor and optionally at least one silicic precursor ; b) aerosol atomizing the solution obtained in stage a) using a spray nozzle that leads to the formation of liquid droplets of diameter less than or equal to 300 µm ; c) drying said droplets ; d) crushing the solid product obtained in stage c) ; e) mixing into a solution at least one surfactant, at least one aluminic precursor, optionally at least one silicic precursor and at least a fraction of the solid product obtained in stage d) so as to form a suspension in which the volume percentage of non-volatile compounds is at least 7 %; f) aerosol atomizing the suspension obtained in stage e) using a spray nozzle that leads to the formation of suspension droplets, which are precursors of the constituent spherical elementary particles of diameter D such that 10 < D (µm) ≤ 100 of the material according to the invention ; g) drying said droplets obtained in stage f) ; and h) removing said surfactant introduced in said stages a) and e) so as to obtain a mesostructured porosity material.

14. A method for preparing a mesostructured material as claimed in any one of claims 9 to 12, comprising: a₀) synthesizing, in the presence of at least one structuring agent, zeolite nanocrystals of maximum nanometric size equal to 1000 nm so as to obtain a colloidal solution in which said nanocrystals are dispersed ; a') mixing into a solution at least one surfactant, at least one aluminic precursor, optionally at least one silicic precursor and at least a colloidal solution obtained according to a₀) ; b') aerosol atomizing the solution obtained in stage a') using a spray nozzle that leads to the formation of liquid droplets of diameter less than or equal to 300 µm ; c') drying said droplets ; d') crushing the solid product obtained in stage c') ; e') mixing into a solution at least one surfactant, at least one aluminic precursor, optionally at least one silicic precursor, at least a colloidal solution obtained according to a₀) and at least a fraction of the solid product obtained in stage d') so as to form a suspension in which the volume percentage of non-volatile compounds is at least 7 %; f') aerosol atomizing the suspension obtained in stage e') using a spray nozzle that leads to the formation of suspension droplets, which are precursors of the constituent spherical elementary particles of diameter D such that 10 < D (µm) ≤ 100 of the material according to the invention ; g') drying said droplets obtained in stage f') ; and h') removing said surfactant introduced in stages a') and e') so as to obtain a mesostructured/zeolitic mixed material.

15. A method for preparing a mesostructured material as claimed in any one of claims 9 to 12, comprising: a") mixing into a solution at least one surfactant, at least one aluminic precursor, optionally at least one silicic precursor and zeolite crystals that disperse in form of nanocrystals of maximum nanometric size equal to 1000 nm in said solution ; b") aerosol atomizing the solution obtained in stage a") using a spray nozzle that leads to the formation of liquid droplets of diameter less than or equal to 300 µm ; c") drying said droplets ; d") crushing the solid product obtained in stage c") ; e") mixing into a solution at least one surfactant, at least one aluminic precursor, optionally at least one silicic precursor, zeolite crystals that disperse in form of nanocrystals of maximum nanometric size equal to 1000 nm in said solution and at least a fraction of the solid product obtained in stage d") so as to form a suspension in which the volume percentage of non-volatile compounds is at least 7 %; f") aerosol atomizing the suspension obtained in stage e") using a spray nozzle that leads to the formation of suspension droplets, which are precursors of the constituent spherical elementary particles of diameter D such that 10 < D (µm) ≤ 100 of the material according to the invention ; g") drying said droplets obtained in stage f") ; and h") removing said surfactant introduced in stages a") and e") so as to obtain a mesostructured/zeolitic mixed material.

## Patentansprüche

1. Mesostrukturierter Werkstoff, der aus mindestens zwei kugelförmigen Elementarpartikeln besteht, wobei jeder dieser Partikel eine mesostrukturierte Matrix auf Aluminiumoxidbasis umfasst, wobei die Matrix einen Porendurchmesser im Bereich von 1,5 bis 30 nm aufweist sowie einen Aluminiumoxidgehalt, der mehr als 46 Gewichts-% bezogen auf die Masse der Matrix ausmacht, wobei sie amorphe Wände mit einer Dicke im Bereich von 1 bis 30 nm aufweist, wobei die kugelförmigen Elementarpartikel einen Durchmesser D von mehr als 10 µm und höchstens 100 µm haben (10 < D (µm) ≤ 100).

2. Werkstoff nach Anspruch 1, derart, dass die kugelförmigen Partikel einen Durchmesser D im Bereich von 11 bis 70 µm haben.

3. Werkstoff nach Anspruch 2, derart, dass die kugelförmigen Partikel einen Durchmesser D im Bereich von 11 bis 50 µm haben.

4. Werkstoff nach Anspruch 3, derart, dass die kugelförmigen Partikel einen Durchmesser D im Bereich von 15 bis 50 µm haben.

5. Werkstoff nach einem der Ansprüche 1 bis 4, derart, dass die mesostrukturierte Matrix auf Aluminiumoxidbasis Siliciumoxid umfasst.

6. Werkstoff nach Anspruch 5, derart, dass die mesostrukturierte Matrix ein Si/Al-Molverhältnis aufweist, das streng kleiner als 1 ist.

7. Werkstoff nach einem der Ansprüche 1 bis 6, derart, dass die mesostrukturierte Matrix eine kubische, vermikuläre, cholesterische, lamellare, bikontinuierliche oder hexagonale Struktur aufweist.

8. Werkstoff nach einem der Ansprüche 1 bis 7, derart, dass er eine spezifische Oberfläche im Bereich von 100 bis 1200 m²/g aufweist.

9. Werkstoff nach einem der Ansprüche 1 bis 8, derart, dass jeder der kugelförmigen Partikel zeolithische Nanokristalle mit einer Porenöffnung im Bereich von 0,2 bis 2 nm umfasst.

10. Werkstoff nach Anspruch 9, derart, dass die zeolithischen Nanokristalle mindestens einen Zeolith umfassen, das aus den Zeolithen der Strukturtypen MFI, BEA, FAU und LTA ausgewählt ist.

11. Werkstoff nach Anspruch 9 oder 10, derart, dass die zeolithischen Nanokristalle mindestens einen vollständig siliciumbasierten Zeolith umfassen.

12. Werkstoff nach Anspruch 9 oder 10, derart, dass die zeolithischen Nanokristalle mindestens einen Zeolith umfassen, der Silicium und Aluminium enthält.

13. Verfahren zur Herstellung eines mesostrukturierten Werkstoffs nach einem der Ansprüche 1 bis 8, umfassend a) das Vermischen in Lösung mindestens eines Tensids, mindestens einer aluminiumhaltigen Vorläufersubstanz und gegebenenfalls mindestens einer siliciumhaltigen Vorläufersubstanz; b) das Zerstäuben der Lösung, die in Schritt a) erhalten wurde, als Aerosol unter Verwendung einer Zerstäubungsdüse, was zur Bildung flüssiger Tröpfchen führt, die einen Durchmesser von höchstens 300 µm aufweisen; c) das Trocknen der Tröpfchen, d) das Zerkleinern des feststofflichen Produkts, das in Schritt c) erhalten wurde; e) das Vermischen in Lösung mindestens eines Tensids, mindestens einer aluminiumhaltigen Vorläufersubstanz, gegebenenfalls mindestens einer siliciumhaltigen Vorläufersubstanz und mindestens einer Fraktion des feststofflichen Produkts, das in Schritt d) erhalten wurde, sodass eine Suspension gebildet wird, in welcher der Volumenprozentanteil an flüchtigen Verbindungen mindestens 7 % beträgt; f) das Zerstäuben der Suspension, die in Schritt e) erhalten wurde, als Aerosol unter Verwendung einer Zerstäubungsdüse, was zur Bildung von Suspensionströpfchen führt, welche die Vorläufer der kugelförmigen Elementarpartikel sind, deren Durchmesser D derart ist, dass 10 < D (µm) ≤ 100 ist, und aus denen der erfindungsgemäße Werkstoff besteht; g) das Trocknen der Tröpfchen, die in Schritt f) erhalten wurden, und h) das Entfernen des Tensids, das in den Schritten a) und e) zugesetzt wurde, um einen Werkstoff mit mesostrukturierter Porenbeschaffenheit zu erhalten.

14. Verfahren zur Herstellung eines mesostrukturierten Werkstoffs nach einem der Ansprüche 9 bis 12, umfassend a₀) die Synthese, in Gegenwart mindestens eines strukturgebenden Mittels, von zeolithischen Nanokristallen mit einer Größe im Nanometerbereich, die höchstens 1000 nm beträgt, um eine kolloidale Lösung zu erhalten, in welcher die Nanokristalle dispergiert sind; a') das Vermischen in Lösung mindestens eines Tensids, mindestens einer aluminiumhaltigen Vorläufersubstanz und gegebenenfalls mindestens einer siliciumhaltigen Vorläufersubstanz sowie mindestens einer kolloidalen Lösung, die gemäß a₀) erhalten wurde; b') das Zerstäuben der Lösung, die in Schritt a') erhalten wurde, als Aerosol unter Verwendung der Zerstäubungsdüse, was zur Bildung flüssiger Tröpfchen führt, die einen Durchmesser von höchstens 300 µm aufweisen; c') das Trocknen der Tröpfchen, d') das Zerkleinern des feststofflichen Produkts, das in Schritt c') erhalten wurde; e') das Vermischen in Lösung mindestens eines Tensids, mindestens einer aluminiumhaltigen Vorläufersubstanz und gegebenenfalls mindestens einer siliciumhaltigen Vorläufersubstanz, mindestens einer kolloidalen Lösung, die gemäß a₀) erhalten wurde, und mindestens einer Fraktion des feststofflichen Produkts, das in Schritt d') erhalten wurde, sodass eine Suspension gebildet wird, in welcher der Volumenprozentanteil an flüchtigen Verbindungen mindestens 7 % beträgt; f) das Zerstäuben der Suspension, die in Schritt e') erhalten wurde, als Aerosol unter Verwendung einer Zerstäubungsdüse, was zur Bildung von Suspensionströpfchen führt, welche die Vorläufer der kugelförmigen Elementarpartikel sind, deren Durchmesser D derart ist, dass 10 < D (µm) ≤ 100 ist, und aus denen der erfindungsgemäße Werkstoff besteht; g') das Trocknen der Tröpfchen, die in Schritt f) erhalten wurden, und h') das Entfernen des Tensids, das in den Schritten a') und e') zugesetzt wurde, um einen mesostrukturierten/zeolithischen Mischwerkstoff zu erhalten.

15. Verfahren zur Herstellung eines mesostrukturierten Werkstoff nach einem der Ansprüche 9 bis 12, umfassend a") das Vermischen in Lösung mindestens eines Tensids, mindestens einer aluminiumhaltigen Vorläufersubstanz, gegebenenfalls mindestens einer siliciumhaltigen Vorläufersubstanz und von zeolithischen Kristallen, die sich in Form von Nanokristallen, deren Größe im Nanometerbereich liegt und höchstens 1000 nm beträgt, in der Lösung dispergieren; b") das Zerstäuben der Lösung, die in Schritt a") erhalten wurde, als Aerosol unter Verwendung der Zerstäubungsdüse, was zur Bildung flüssiger Tröpfchen führt, die einen Durchmesser von höchstens 300 µm aufweisen; c") das Trocknen der Tröpfchen, d") das Zerkleinern des feststofflichen Produkts, das in Schritt c") erhalten wurde; e") das Vermischen in Lösung mindestens eines Tensids, mindestens einer aluminiumhaltigen Vorläufersubstanz, möglicherweise mindestens einer siliciumhaltigen Vorläufersubstanz, von zeolithischen Kristallen, die sich in Form von Nanokristallen, deren Größe im Nanometerbereich liegt und höchstens 1000 nm beträgt, in der Lösung dispergieren, und von mindestens einer Fraktion des feststofflichen Produkts, das in Schritt d") erhalten wurde, sodass eine Suspension gebildet wird, in welcher der Volumenprozentanteil an flüchtigen Verbindungen mindestens 7 % beträgt; f') das Zerstäuben der Suspension, die in Schritt e") erhalten wurde, als Aerosol unter Verwendung einer Zerstäubungsdüse, was zur Bildung von Suspensionströpfchen führt, welche die Vorläufer der kugelförmigen Elementarpartikel sind, deren Durchmesser D derart ist, dass 10 < D (µm) ≤ 100 ist, und aus denen der erfindungsgemäße Werkstoff besteht; g") das Trocknen der Tröpfchen, die in Schritt f") erhalten wurden, und h") das Entfernen des Tensids, das in den Schritten a") und e") zugesetzt wurde, um einen mesostrukturierten/zeolithischen Mischwerkstoff zu erhalten.
